# EUROPEAN PATENT APPLICATION

(11) **EP 4 602 916 A1**
(43) Date of publication of application: **20.08.2025**
(21) Application number: 23877354.3
(22) Date of filing: 13.10.2023
(51) Int. Cl.: A01N 37/46, A01G 7/06, A01N 37/20, A01P 21/00

(54) **COMPOSITION FOR IMPARTING STRESS RESISTANCE TO PLANTS**

(30) Priority: 14.10.2022 JP 2022165870; 30.11.2022 JP 2022192012
(71) Applicant: KIRIN HOLDINGS KABUSHIKI KAISHA, Nakano-ku, Tokyo 164-0001 (JP)
(72) Inventor: HIRAKAWA, Takeshi, Tokyo 164-0001 (JP); YAMAGISHI TANNO, Seia, Tokyo 164-0001 (JP)
(74) Representative: Hoffmann Eitle
(86) International application number: PCT/JP2023/037147
(87) International publication number: WO 2024/080353

(57) **Abstract**

This invention provides a composition for providing a plant with stress resistance, a method for producing a plant with stress resistance, and a method for providing a plant with stress resistance. The composition for providing a plant with environmental stress resistance comprises, as an active ingredient, N-acetylglutamic acid or a salt or solvate thereof.

## Description

### Technical Field

The present invention relates to a technique of providing a plant with stress resistance.

### Background Art

Environmental stress, such as high-temperature stress, inhibits healthy growth of a plant through, for example, protein denaturation or cell membrane breakdown. Accordingly, a technique of enhancing high-temperature stress resistance of a plant is necessary to realize stable plant growth at high temperatures or to resist a rapid temperature increase.

Oxidation stress inhibits healthy growth of a plant through, for example, generation of active oxygen species in chloroplasts or induction of mitochondrial cell death. Since oxidation stress is induced by a wide variety of environmental stresses including high temperature, dehydration, and low temperature stresses, oxidation stress resistance is very critical for a plant to keep growing in a changing environment.

As a method for enhancing stress resistance of a plant, a method for producing a plant that overexpresses a high-temperature stress-responsive gene inherent to a plant is available. However, such method is problematic in terms of, for example, the need for transformation and inhibited normal growth.

In recent years, a method for enhancing stress resistance through treatment with a low-molecular-weight compound has been reported (see Patent Literature 1).

### Citation List

### Patent Literature

### Patent Literature 1: JP 2017-137281 A

### Summary of Invention

### Technical Problem

The present invention provides a composition for providing a plant with stress resistance, a method for producing a plant with stress resistance, and a method for providing a plant with stress resistance. In order to prepare against a food shortage caused by frequent abnormal weather from global warming or population growth, enhancement of environmental stress resistance of crops is one of the most critical objectives to develop crops that are resistant to unexpectable high/low temperatures and crops that can be cultivated on lands unsuitable for cultivation due to salt or dehydration damages.

### Solution to Problem

The present inventors have conducted concentrated studies in order to develop a method for providing a plant with environmental stress resistance. As a result, they discovered that a plant can be provided with environmental stress resistance through application of N-acetylglutamic acid or a salt or solvate thereof to a plant. This has led to the completion of the present invention.

Specifically, the present invention is as described below.
[1] A composition for providing a plant with environmental stress resistance comprising, as an active ingredient, N-acetylglutamic acid or a salt or solvate thereof.
[2] The composition according to [1], wherein the plant is a dicotyledonous plant or a monocotyledonous plant.
[3] The composition according to [1], wherein the plant is a monocotyledonous plant.
[4] The composition according to [3], wherein the plant is a plant of *Gramineae.*
[5] The composition according to [1], wherein the plant is a plant of *Cannabaceae* or a plant of *Brassicaceae.*
[6] The composition according to [5], wherein the plant is a hop.
[7] The composition according to any of [1] to [6], wherein the environmental stress is at least one type of stress selected from the group consisting of high-temperature stress, low-temperature stress, oxidation stress, high-light stress, dehydration stress, chemical stress, and damage stress.
[8] The composition according to [7], wherein the environmental stress is high-temperature stress or oxidation stress.
[9] A method for producing a plant with environmental stress resistance comprising applying N-acetylglutamic acid or a salt or solvate thereof to a plant.
[10] The method according to [9], wherein the plant is a dicotyledonous plant or a monocotyledonous plant.
[11] The method according to [9], wherein the plant is a monocotyledonous plant.
[12] The method according to [11], wherein the plant is a plant of *Gramineae.*
[13] The method according to [9], wherein the plant is a plant of *Cannabaceae* or a plant of *Brassicaceae.*
[14] The method according to [13], wherein the plant is a hop.
[15] The method according to any of [9] to [14], wherein the environmental stress is at least one type of stress selected from the group consisting of high-temperature stress, low-temperature stress, oxidation stress, high-light stress, dehydration stress, chemical stress, and damage stress.
[16] The method according to [15], wherein the environmental stress is high-temperature stress or oxidation stress.
[17] A method for providing a plant with environmental stress resistance comprising applying N-acetylglutamic acid or a salt or solvate thereof to a plant.
[18] The method according to [17], wherein the plant is a dicotyledonous plant or a monocotyledonous plant.
[19] The method according to [17], wherein the plant is a monocotyledonous plant.
[20] The method according to [19], wherein the plant is a plant of *Gramineae.*
[21] The method according to [17], wherein the plant is a plant of *Cannabaceae* or a plant of *Brassicaceae.*
[22] The method according to [21], wherein the plant is a hop.
[23] The method according to any of [17] to [23], wherein the environmental stress is at least one type of stress selected from the group consisting of high-temperature stress, low-temperature stress, oxidation stress, high-light stress, dehydration stress, chemical stress, and damage stress.
[24] The method according to [23], wherein the environmental stress is high-temperature stress or oxidation stress.
[25] A composition for increasing the expression of a protein encoded by an environmental stress-responsive gene of a plant comprising, as an active ingredient, N-acetylglutamic acid or a salt or solvate thereof, wherein the protein encoded by an environmental stress-responsive gene is ZAT, HSFA, or HSP.
[26] The composition for increasing the expression according to [25], wherein the plant is a dicotyledonous plant or a monocotyledonous plant.
[27] The composition for increasing the expression according to [25], wherein the plant is a monocotyledonous plant.
[28] The composition for increasing the expression according to [27], wherein the plant is a plant of *Gramineae.*
[29] The composition for increasing the expression according to [25], wherein the plant is a plant of *Cannabaceae* or a plant of *Brassicaceae.*
[30] The composition for increasing the expression according to [29], wherein the plant is a hop.
[31] The composition for increasing the expression according to any of [25] to [30], wherein the environmental stress is at least one type of stress selected from the group consisting of high-temperature stress, low-temperature stress, oxidation stress, high-light stress, dehydration stress, chemical stress, and damage stress.
[32] The composition for increasing the expression according to [31], wherein the environmental stress is high-temperature stress or oxidation stress.
[33] The composition for increasing the expression according to any of [25] to [32], wherein the protein encoded by an environmental stress-responsive gene is ZAT.
[34] The composition for increasing the expression according to any of [25] to [32], wherein the protein encoded by an environmental stress-responsive gene is HSFA.
[35] The composition for increasing the expression according to any of [25] to [32], wherein the protein encoded by an environmental stress-responsive gene is HSP.
[36] A composition for enhancing plant growth comprising, as an active ingredient, N-acetylglutamic acid or a salt or solvate thereof.
[37] The composition for enhancing plant growth according to [36], wherein the plant is a dicotyledonous plant or a monocotyledonous plant.
[38] The composition for enhancing plant growth according to [36], wherein the plant is a monocotyledonous plant.
[39] The composition for enhancing plant growth according to [38], wherein the plant is a plant of *Gramineae.*
[40] The composition for enhancing plant growth according to [36], wherein the plant is a plant of *Cannabaceae* or a plant of *Brassicaceae.*
[41] The composition for enhancing plant growth according to [40], wherein the plant is a hop.
[42] The composition for enhancing plant growth according to any of [36] to [41], wherein the effects of enhancing plant growth is attained by reducing the influence of environmental stress that a plant usually receives.
[43] The composition for enhancing plant growth according to [42], wherein the environmental stress that a plant usually receives is at least one type of stress selected from the group consisting of high-temperature stress, low-temperature stress, oxidation stress, high-light stress, dehydration stress, chemical stress, and damage stress.
[44] The composition for enhancing plant growth according to [43], wherein the environmental stress is high-temperature stress or oxidation stress.
[45] A composition for reinforcing epigenetic modification of an environmental stress-responsive gene of a plant comprising, as an active ingredient, N-acetylglutamic acid or a salt or solvate thereof.
[46] The composition for reinforcing epigenetic modification according to [45], wherein the epigenetic modification is histone acetylation.
[47] The composition for reinforcing epigenetic modification according to [45] or [46], wherein the environmental stress-responsive gene is a ZAT gene or an HSFA gene.
[48] The composition for reinforcing epigenetic modification according to any of [45] to [47], wherein the plant is a dicotyledonous plant or a monocotyledonous plant.
[49] The composition for reinforcing epigenetic modification according to any of [45] to [47], wherein the plant is a monocotyledonous plant.
[50] The composition for reinforcing epigenetic modification according to [49], wherein the plant is a plant of *Gramineae.*
[51] The composition for reinforcing epigenetic modification according to any of [45] to [47], wherein the plant is a plant of *Cannabaceae* or a plant of *Brassicaceae.*
[52] The composition for reinforcing epigenetic modification according to [51], wherein the plant is a hop.
[53] A composition for increasing the expression of histone acetyltransferase that elevates the histone acetylation level of an environmental stress-responsive gene of a plant comprising, as an active ingredient, N-acetylglutamic acid or a salt or solvate thereof.
[54] The composition for increasing the expression of histone acetyltransferase according to [53], wherein the environmental stress-responsive gene is a ZAT gene or an HSFA gene.
[55] The composition for increasing the expression of histone acetyltransferase according to [53] or [54], wherein the histone acetyltransferase is HAC.
[56] The composition for increasing the expression of histone acetyltransferase according to any of [53] to [55], wherein the plant is a dicotyledonous plant or a monocotyledonous plant.
[57] The composition for increasing the expression of histone acetyltransferase according to any of [53] to [55], wherein the plant is a monocotyledonous plant.
[58] The composition for increasing the expression of histone acetyltransferase according to [57], wherein the plant is a plant of *Gramineae.*
[59] The composition for increasing the expression of histone acetyltransferase according to any of [53] to [55], wherein the plant is a plant of *Cannabaceae* or a plant of *Brassicaceae.*
[60] The composition for increasing the expression of histone acetyltransferase according to [59], wherein the plant is a hop.

The description incorporates the contents disclosed by JP Patent Application Nos. 2022-165870 and 2022-192012, based on which the priority of the present application claims. Advantageous Effects of Invention

Through application of N-acetylglutamic acid or a salt or solvate thereof to a plant, the plant can be provided with resistance to environmental stress, such as high-temperature stress, low-temperature stress, oxidation stress, high-light stress, dehydration stress, chemical stress, or damage stress. This enables production of crops that are resistant to unexpectable high/low temperatures and crops that can be cultivated on lands unsuitable for cultivation due to salt or dehydration damage in order to prepare against a food shortage caused by frequent abnormal weather from global warming or population growth.

### Brief Description of Drawings

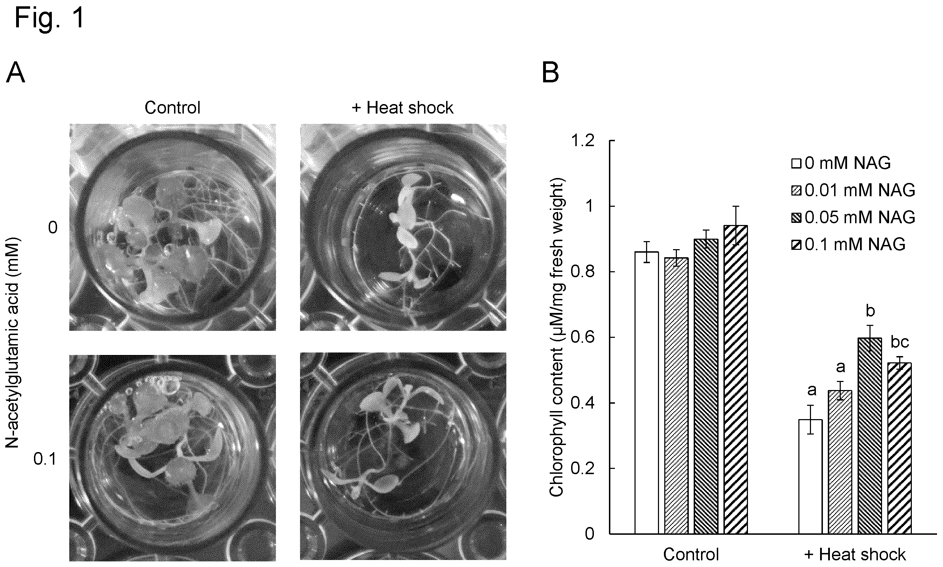

[Figure 1] Figure 1 shows the effects of N-acetylglutamic acid on *Arabidopsis thaliana* subjected to high-temperature stress application. Figure 1A shows the results of high-temperature stress application on *Arabidopsis thaliana* subjected to N-acetylglutamic acid treatment and *Arabidopsis thaliana* subjected to treatment with 0.1 mM N-acetylglutamic acid (NAG) and then to high-temperature stress application (44°C, 1 hour). Figure 1B shows the results of quantification of the chlorophyll content in *Arabidopsis thaliana* subjected to N-acetylglutamic acid treatment and then to high-temperature stress application and the chlorophyll content in *Arabidopsis thaliana* subjected to NAG treatment and then to high-temperature stress application on a fresh weight basis (n = 9; a test method: the Tukey's method; P < 0.05 among a, b, c, and d; an error bar: a standard error).

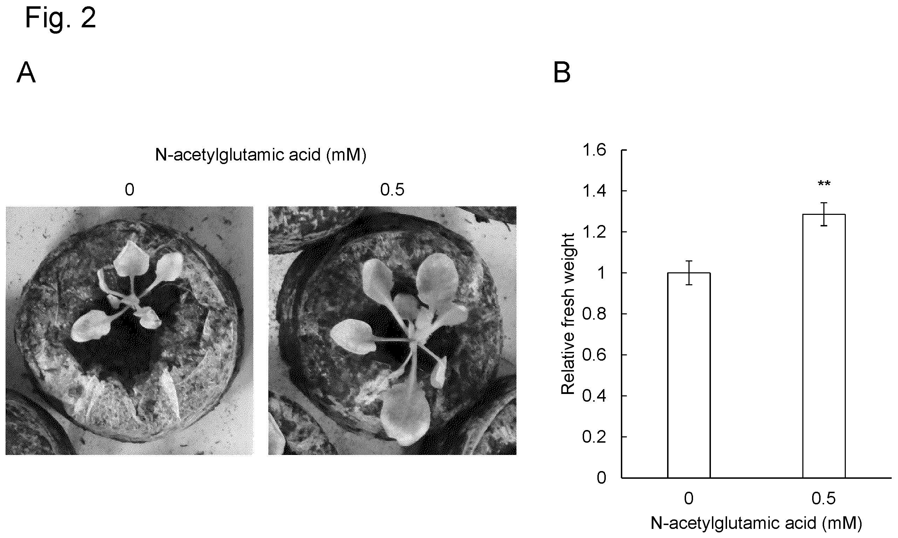

[Figure 2] Figure 2 shows the effects of N-acetylglutamic acid on pot-cultivated *Arabidopsis thaliana* subjected to high-temperature stress application. Figure 2A shows the results of high-temperature stress application on pot-cultivated *Arabidopsis thaliana* subjected to N-acetylglutamic acid treatment by showing the pot-cultivated *Arabidopsis thaliana* subjected to treatment with 0.5 mM N-acetylglutamic acid (NAG) and then to high-temperature stress application (37°C, for 5 days). Figure 2B shows the results of quantification of the fresh weight of the aboveground part of the *Arabidopsis thaliana* subjected to N-acetylglutamic acid treatment and then to high-temperature stress application in pot cultivation and the fresh weight of the aboveground part of the *Arabidopsis thaliana* subjected to NAG treatment and then to high-temperature stress application. A relative fresh weight based on the fresh weight of a group not subjected to NAG treatment was calculated (n = 30; a test method: the Student's t-test; **P < 0.01; an error bar: a standard error).

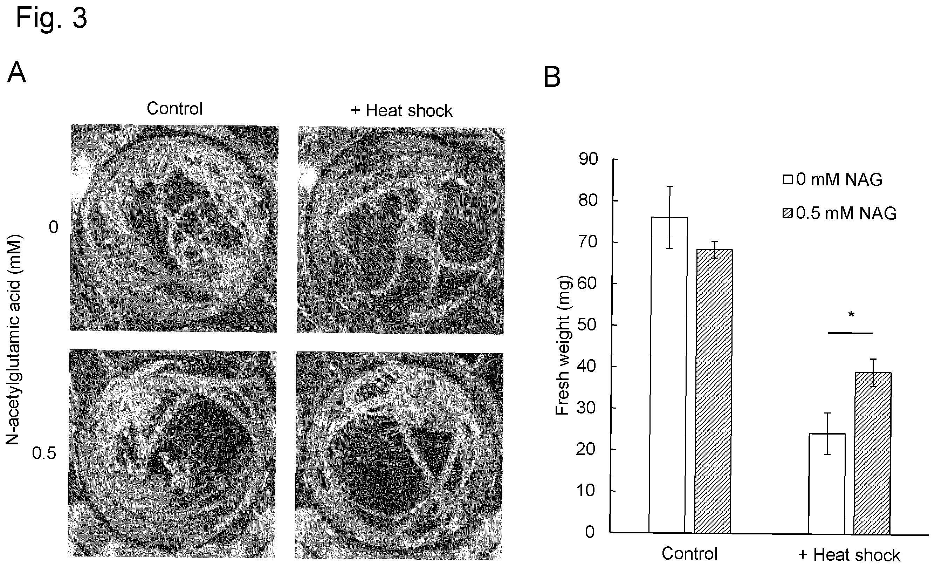

[Figure 3] Figure 3 shows the effects of N-acetylglutamic acid on rice subjected to high-temperature stress application. Figure 3A shows the results of high-temperature stress application on rice subjected to N-acetylglutamic acid treatment by showing the rice subjected to treatment with 0.5 mM N-acetylglutamic acid (NAG) and then to high-temperature stress application (44°C, 180 minutes). Figure 3B shows the results of quantification of the fresh weight of the aboveground part of the rice subjected to N-acetylglutamic acid treatment and then to high-temperature stress application and the fresh weight of the aboveground part of the rice subjected to NAG treatment and then to high-temperature stress application (n = 9; a test method: the Student's t-test; *P < 0.05; an error bar: a standard error).

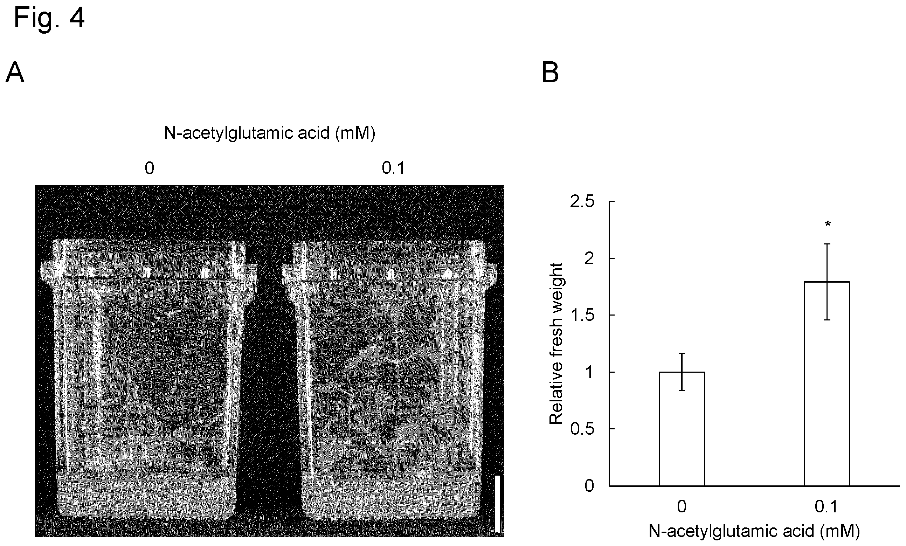

[Figure 4] Figure 4 shows the effects of N-acetylglutamic acid on a hop subjected to high-temperature stress application. Figure 4A shows the results of high-temperature stress application on a hop subjected to N-acetylglutamic acid treatment by showing the hop (the variety: Saaz) subjected to treatment with 0.1 mM N-acetylglutamic acid (NAG) and then to high-temperature stress application (30°C, 2 weeks) (a scale bar: 2 cm). Figure 4B shows the results of quantification of the fresh weight of the aboveground part of the hop subjected to N-acetylglutamic acid treatment and then to high-temperature stress application. A relative fresh weight based on the fresh weight of a group not subjected to NAG treatment was calculated (n = 17; a test method: the Student's t-test; *P < 0.05; an error bar: a standard error).

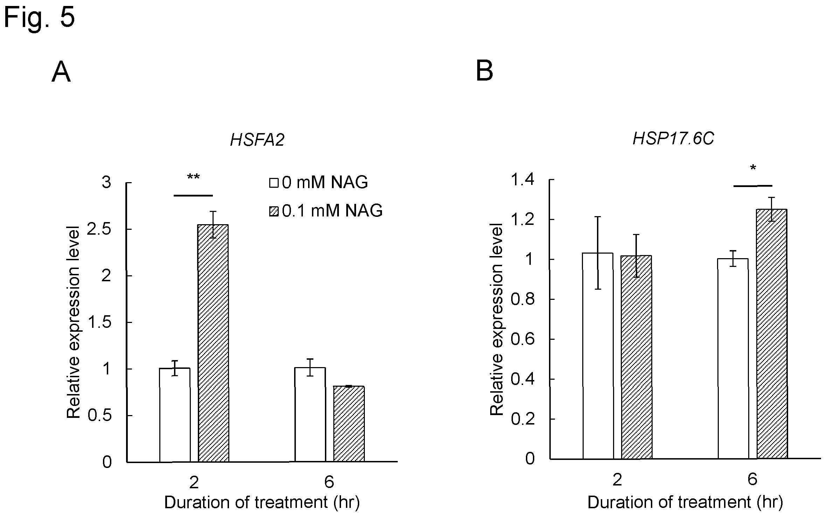

[Figure 5] Figure 5 shows the results of analysis of the gene expression levels of HSFA2 (Figure 5A) and HSP17.6C (Figure 5B) in the *Arabidopsis thaliana* subjected to N-acetylglutamic acid treatment. Relative expression levels of HSFA2 and HSP17.6C based on the expression levels in a group not subjected to N-acetylglutamic acid (NAG) treatment were calculated (n = 3; a test method: the Student's t-test; *P < 0.05, **P < 0.01; an error bar: a standard error).

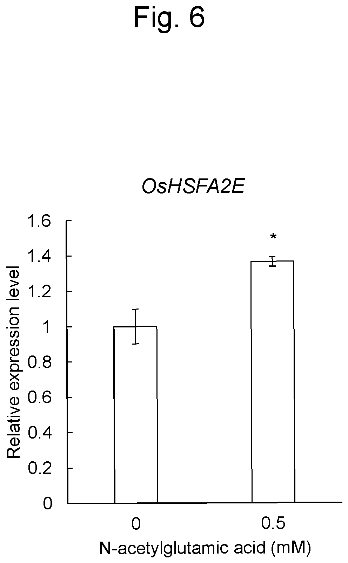

[Figure 6] Figure 6 shows the results of analysis of the gene expression level of OsHSFA2E in rice subjected to N-acetylglutamic acid treatment. A relative expression level based on the expression level in a group not subjected to N-acetylglutamic acid (NAG) treatment was calculated (n = 3; a test method: the Student's t-test; *P < 0.05; an error bar: a standard error).

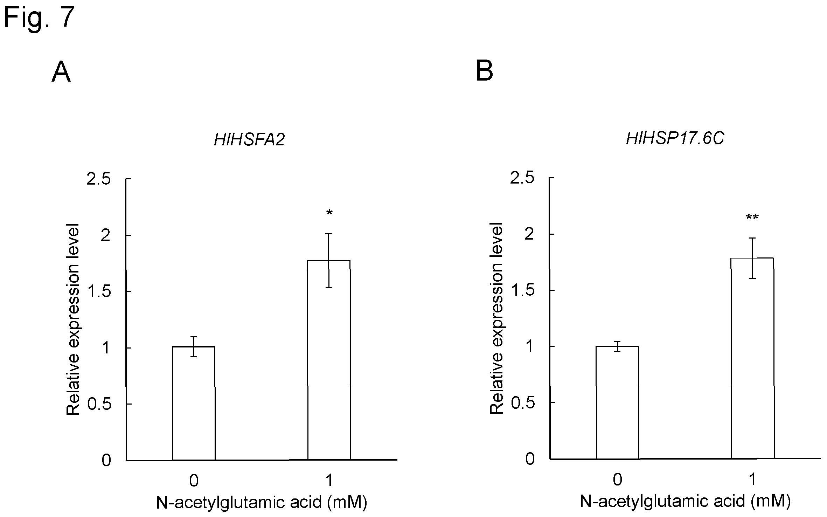

[Figure 7] Figure 7 shows the results of analysis of the gene expression levels of HlHSFA2 (Figure 7A) and HlHSP17.6C (Figure 7B) in the hop subjected to N-acetylglutamic acid treatment. Relative expression levels of HlHSFA2 and HlHSP17.6C based on the expression levels in a group not subjected to N-acetylglutamic acid treatment were calculated (n = 3 (Student's t-test; *P < 0.05, **P < 0.01; an error bar: a standard error).

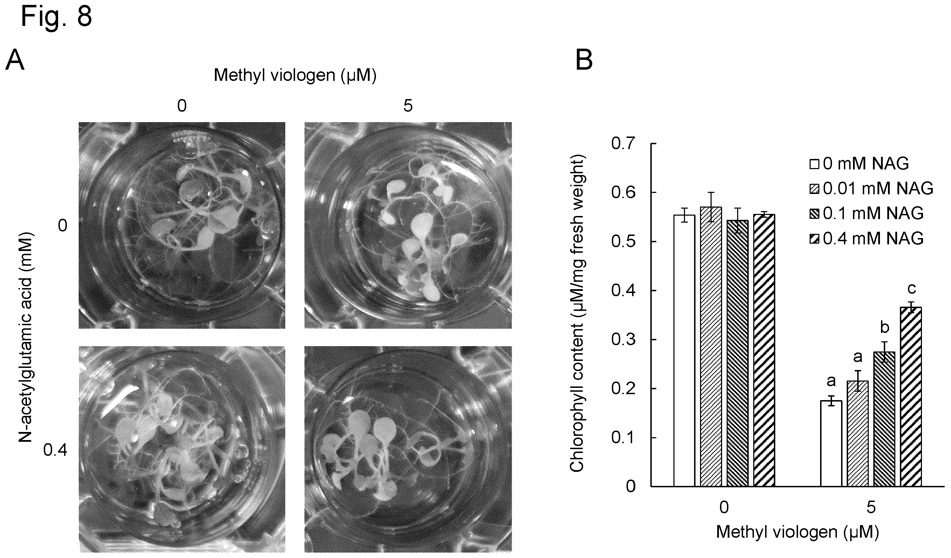

[Figure 8] Figure 8 shows the effects of N-acetylglutamic acid on *Arabidopsis thaliana* subjected to oxidation stress application. Figure 8A shows the results of treatment with an oxidation stress inducer, methyl viologen (MV), on the *Arabidopsis thaliana* subjected to N-acetylglutamic acid treatment by showing the *Arabidopsis thaliana* subjected to treatment with 0.4 mM N-acetylglutamic acid (NAG) and 5 µM MV simultaneously. Figure 8B shows the results of quantification of the chlorophyll content in the *Arabidopsis thaliana* subjected to N-acetylglutamic acid treatment and to treatment with an oxidation stress inducer MV and the chlorophyll content in the *Arabidopsis thaliana* subjected to NAG treatment and MV treatment simultaneously on a fresh weight basis (n = 15; a test method: the Tukey's method; P < 0.05 among a, b, and c; an error bar: a standard error).

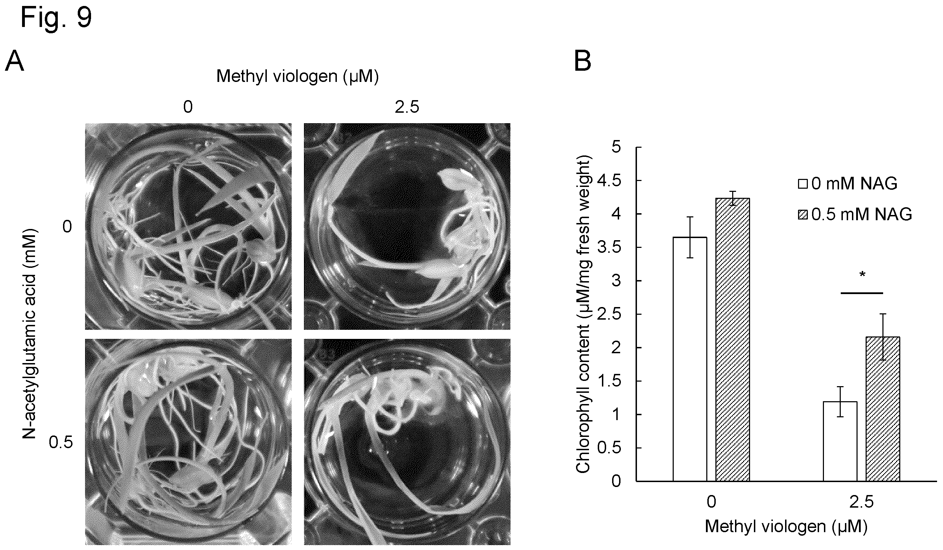

[Figure 9] Figure 9 shows the effects of N-acetylglutamic acid on rice subjected to oxidation stress application. Figure 9A shows the results of treatment with an oxidation stress inducer, methyl viologen (MV), on rice subjected to N-acetylglutamic acid treatment by showing the rice subjected to treatment with 0.5 mM N-acetylglutamic acid (NAG) and 2.5 µM MV simultaneously. Figure 9B shows the results of quantification of the chlorophyll content in the second leaf of the rice subjected to N-acetylglutamic acid treatment and treatment with an oxidation stress inducer MV and the chlorophyll content in the second leaf of the rice subjected to NAG and MV simultaneously on a fresh weight basis (n = 15; a test method: the Student's t-test; *P < 0.05; an error bar: a standard error).

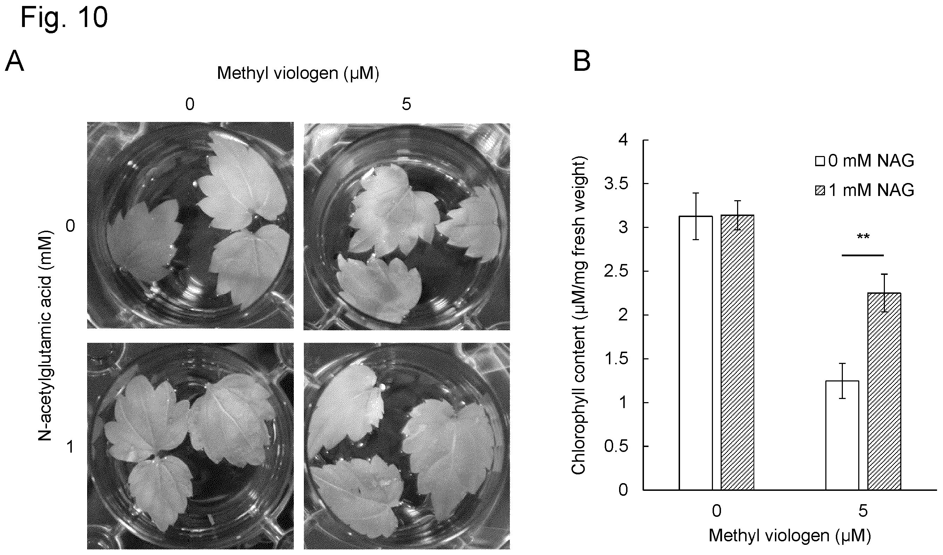

[Figure 10] Figure 10 shows the effects of N-acetylglutamic acid on a hop subjected to oxidation stress application. Figure 10A shows the results of treatment with an oxidation stress inducer, methyl viologen (MV), on the hop leaves subjected to N-acetylglutamic acid treatment by showing the hop leaves subjected to treatment with 1 mM N-acetylglutamic acid (NAG) and treatment with 5 µM MV simultaneously. Figure 10B shows the results of quantification of the chlorophyll content in the hop leaves subjected to N-acetylglutamic acid treatment and MV treatment and the chlorophyll content in the hop leaves subjected to NAG treatment and MV treatment simultaneously on a fresh weight basis (n = 18; a test method: the Student's t-test; **P < 0.01; an error bar: a standard error).

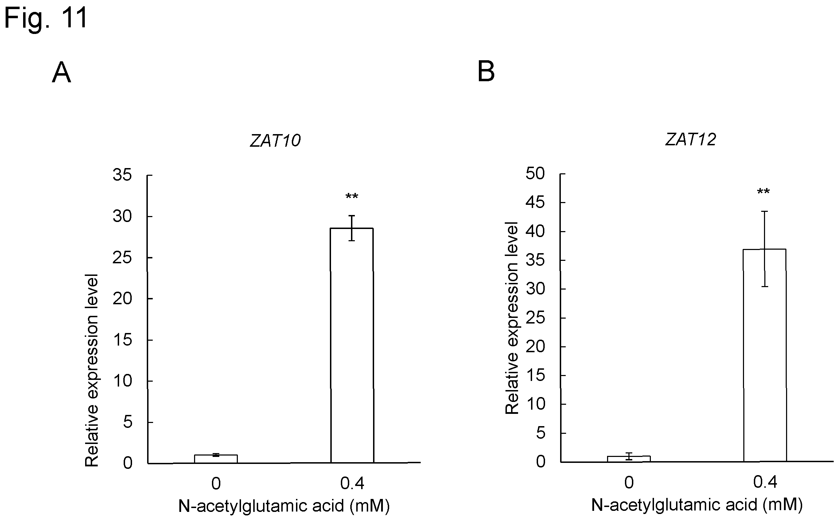

[Figure 11] Figure 11 shows the results of analysis of the gene expression levels of ZAT10 (Figure 11A) and ZAT12 (Figure 11B) in *Arabidopsis thaliana* subjected to N-acetylglutamic acid treatment. Relative expression levels of ZAT10 and ZAT12 based on the expression levels in a group not subjected to N-acetylglutamic acid (NAG) treatment were calculated (n = 3; a test method: the Student's t-test; **P < 0.01; an error bar: a standard error).

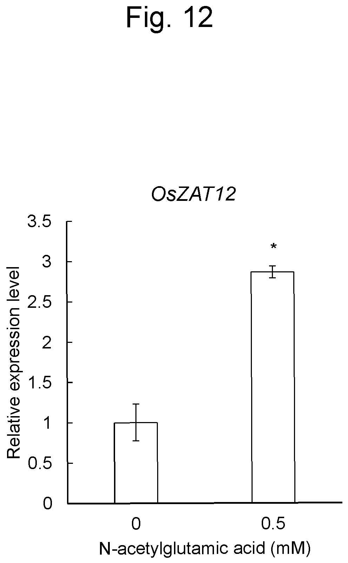

[Figure 12] Figure 12 shows the results of analysis of the gene expression level of OsZAT12 in rice subjected to N-acetylglutamic acid treatment. A relative expression level based on the expression level in a group not subjected to N-acetylglutamic acid (NAG) treatment was calculated (n = 3; a test method: the Student's t-test; *P < 0.05; an error bar: a standard error).

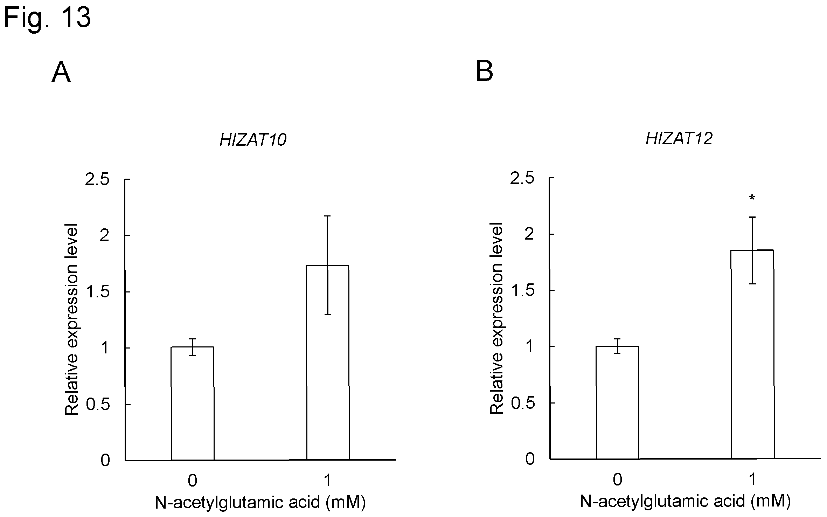

[Figure 13] Figure 13 shows the results of analysis of the gene expression levels of HIZAT10 (Figure 13A) and HIZAT12 (Figure 13B) in a hop subjected to N-acetylglutamic acid treatment. Relative expression levels of HlZAT10 and HlZAT12 based on the expression levels in a group not subjected to N-acetylglutamic acid (NAG) treatment were calculated (n = 3; a test method: the Student's t-test; *P < 0.05; an error bar: a standard error).

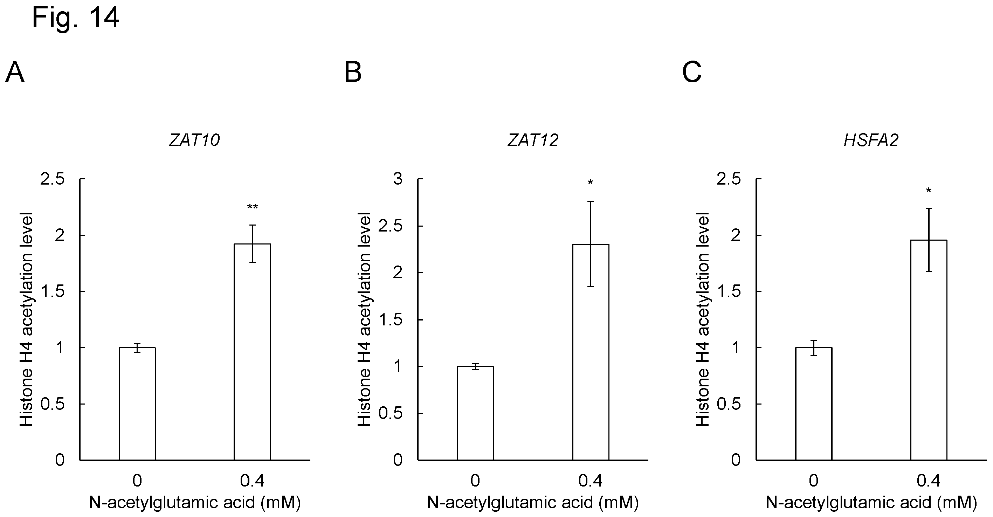

[Figure 14] Figure 14 shows histone H4 acetylation levels of ZAT10, ZAT12, and HSFA2 in *Arabidopsis thaliana* subjected to N-acetylglutamic acid treatment. Relative histone H4 acetylation levels of ZAT10, ZAT12, and HSFA2 based on the histone H4 acetylation levels in a group not subjected to N-acetylglutamic acid treatment were calculated (n = 3; a test method: the Student's t-test; *P < 0.05, **P < 0.01; an error bar: a standard error).

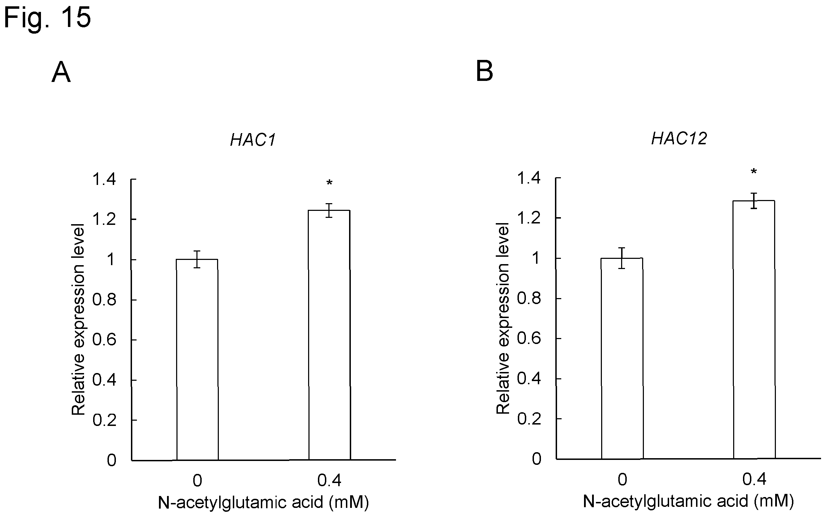

[Figure 15] Figure 15 shows the results of analysis of the gene expression levels of HAC1 and HAC12 in *Arabidopsis thaliana* subjected to N-acetylglutamic acid treatment and high-temperature treatment. Relative expression levels of HAC1 and HAC12 based on the expression levels in a group not subjected to N-acetylglutamic acid treatment were calculated (n = 3; a test method: the Student's t-test; *P < 0.05; an error bar: a standard error). Description of Embodiments

Hereafter, the present invention is described in detail.

The present invention relates to a composition used for providing a plant with environmental stress resistance. As a result of provision of environmental stress resistance, a plant can suppress the influence of environmental stress or has an ability to suppress the influence of environmental stress before environmental stress is applied thereto. Reduction and elimination of the influence of environmental stress are within the scope of "environmental stress resistance." An active ingredient of the composition of the present invention is N-acetylglutamic acid or a salt or solvate thereof. The present invention also relates to a method for providing a plant with environmental stress resistance or a method for producing a plant with environmental stress resistance through application of N-acetylglutamic acid or a salt or solvate thereof to a plant.

The composition comprising N-acetylglutamic acid according to the present invention provides a plant with environmental stress resistance to reduce the influence of environmental stress that a plant usually receives and to enhance plant growth. Accordingly, such composition can be referred to as a composition for enhancing plant growth. The environmental stress that a plant usually receives encompasses mild environmental stress that would not cause whitening, growth insufficiency, withering, or the like.

The term "influence of environmental stress" used herein refers to a condition that is not favorable for a plant caused by environmental stress, such as whitening, growth insufficiency, or withering.

The present invention further relates to a composition for increasing the expression of an environmental stress-responsive protein in a plant, a method for increasing the expression of such protein, and a method for producing a plant with the increased expression of such protein. Furthermore, the present invention relates to a composition for reinforcing epigenetic modification of an environmental stress-responsive gene of a plant, a method for reinforcing epigenetic modification of such gene, and a method for producing a plant with reinforced epigenetic modification of such gene. Furthermore, the present invention relates to a composition for increasing the expression of histone acetyltransferase that elevates the histone acetylation level of an environmental stress-responsive gene of a plant, a method for potentiating such enzyme, and a method for producing a plant in which such enzyme has been potentiated.

### 1. N-acetylglutamic acid

N-acetylglutamic acid has a structure represented by Formula I, the chemical formula thereof is represented by C₇H₁₁NO₅, and it is abbreviated to as "NAG." The external appearance thereof is white to almost white crystal to crystalline powder.

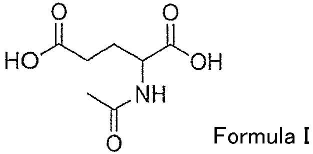

N-acetylglutamic acid of either L-form (N-acetyl-L-glutamic acid) or D-form (N-acetyl-D-glutamic acid) may be used, and N-acetylglutamic acid of L-form (N-acetyl-L-glutamic acid) synthesized *in vivo* is preferable. In prokaryotic organisms and simple eukaryotic organisms, N-acetylglutamic acid is generated by, for example, N-acetylglutamic acid synthase or ornithine acetyltransferase. Accordingly, a substance secreted, separated, or extracted from the organism that produces N-acetylglutamic acid or a substance purified therefrom may be used, or such organism may be used without any processing. N-acetylglutamic acid may be prepared by a method involving the use of an enzyme without the aid of an organism or a method of fermentation involving the use of a microorganism that has or has not been subjected to mutation. N-acetylglutamic acid may also be chemically synthesized. A commercially available product may be used. Commercially available products manufactured by, for example, FUJIFILM Corporation, Wako Pure Chemical Industries, Ltd., Sigma-Aldrich Co. LLC, and Tokyo Chemical Industry Co., Ltd. may be used.

Salts include a salt hydrate and a salt anhydride, and examples include: salts with inorganic bases, such as sodium, potassium, magnesium, calcium, and aluminum; salts with organic bases, such as methylamine, ethylamine, and ethanolamine; salts with basic amino acids, such as lysine and ornithine; and ammonium salt. A salt may be an acid addition salt, and specific examples thereof include acid addition salts with: mineral acids, such as hydrochloric acid, hydrobromic acid, hydriodic acid, sulfuric acid, nitric acid, and phosphoric acid; organic acids, such as formic acid, acetic acid, propionic acid, oxalic acid, malonic acid, succinic acid, fumaric acid, maleic acid, lactic acid, malic acid, tartaric acid, citric acid, methanesulfonic acid, and ethanesulfonic acid; and acidic amino acids, such as aspartic acid and glutamic acid. Hereafter, the term "N-acetylglutamic acid" encompasses a salt and a solvate thereof.

N-acetylglutamic acid is quantified by high-performance liquid chromatography and mass spectrometry (MS). Specifically, a sample containing N-acetylglutamic acid is subjected to high-performance liquid chromatography to separate components, and the separated components are then subjected to mass spectrometry (single MS or tandem MS) to measure the amount of N-acetylglutamic acid contained in the sample.

### 2. Environmental stress

According to NAROPEDIA provided by National Agriculture and Food Research Organization (NARO) (http://lib.ruralnet.or.jp/nrpd/#koumoku=11040), the term "environmental stress" refers to abiotic stress, such as high temperature, low temperature, and dehydration, among external factors that are not favorable for plants. Examples of environmental stress include high-temperature stress, low-temperature stress, oxidation stress, high-light stress, dehydration stress, chemical stress, and damage stress.

The term "oxidation stress" is generally defined as a difference between oxidative damage caused by active oxygen species generated *in vivo* and an antioxidant potential of an organism. Oxidation stress is induced by an increased amount of active oxygen species produced in plant bodies exposed to the environmental stress or a lowered antioxidant system. Oxidation stress may be induced by an increased amount of active oxygen species produced because of the environmental stress. Plants exposed to oxidation stress may undergo, for example, chlorosis, growth insufficiency, or withering.

Plants inherently have resistance to environmental stress and have the capacity to suppress lowering in the survival rate, the growth, and the yield. This capacity is referred to as "environmental stress resistance." As environmental stress resistance of plants, 4 types of stress resistance; i.e., high-temperature stress resistance, low-temperature stress resistance, dehydration stress resistance, and salt stress resistance, are known.

The term "high-temperature resistance" refers to a capacity to resist high temperatures. When a temperature is increased rapidly, a plant generates a heat shock protein (HSP). HSP has a function of preventing heat-induced denaturation of an intracellular protein or restoring the original structure of the denatured protein. Plants that have generated HSP are capable of resisting high temperatures at which they usually die. Thus, the term "high-temperature stress" refers to a situation in which plants are exposed to temperatures higher than the temperature range suitable for usual growth of the plants for any period of time on any number of occasions. Plants exposed to high-temperature stress would have problems, such as inhibited photosynthesis, difficulty of water absorption, and phytohormone imbalance. As a result, physiological disorders occur to result in, for example, chlorosis, growth insufficiency, or withering.

The term "low-temperature resistance" refers to a capacity to resist low temperatures. Plants originating in tropical and subtropical regions including rice are damaged in a cool temperature range of approximately 10°C to 15°C. Such low-temperature-sensitive plants have an extent of membrane-lipid unsaturation lower than that of cold-temperature-resistant plants such as wheat, and membrane fluidity is lowered at cool temperatures. **In** low-temperature-resistant plants, desaturase activity is enhanced in the process of low temperature adaptation, and a rate of unsaturated lipids is further increased. While freeze damage usually occurs at a temperature equal to or lower than the water-freezing temperature, low-temperature-resistant plants acquire freeze resistance due to low-temperature adaptation, and they acquire the capacity to suppress formation of ice crystals due to supercooling or delayed dehydration. Thus, the term "low-temperature stress" refers to a situation in which a plant is exposed to temperatures lower than the temperature range suitable for usual growth of the plant for any period of time on any number of occasions. The term "temperature stress" refers to a situation in which a plant is exposed to temperatures higher or lower than the temperature range suitable for usual growth of the plant for any period of time on any number of occasions. Plants exposed to low-temperature stress would have physiological disorders, resulting in, for example, growth insufficiency or withering.

The term "dehydration resistance" refers to an ability to resist the water deficit. In the event of water deficit, plants protect themselves from dehydration by, for example, shedding leaves to reduce the area of leaves, thickening the cuticular layer or closing stomata on the surface of leaves to prevent transpiration, or enhancing root elongation to develop the rhizosphere in a lower underground layer of soils with higher water content. Also, compatible solutes, such as sugars and amino acids, are accumulated in the cytoplasm to regulate the osmotic pressure. Plants thus maintain the water balance. Hydrophilic LEA proteins are considered to keep water and prevent crystallization caused by dehydration of other proteins. Thus, the term "dehydration stress" refers to a situation in which plants are exposed to the moisture conditions that are lower than the moisture conditions under which the plants can usually grow for any period of time on any number of occasions. Plants exposed to dehydration stress would have physiological disorders, resulting in, for example, growth insufficiency or withering.

The term "salt stress resistance" refers to an ability to resist the salt damage. Salt damage is caused by water deficit induced by osmotic stress and enzyme inactivation or inhibition of protein synthesis induced by ion toxicity. In the event of water deficit, plants accumulate compatible solutes in the cytoplasm to regulate the osmotic pressure as in the case of dehydration. In order to acquire resistance to ion toxicity, an ability to transport Na⁺ to the vacuole to isolate Na⁺ from the cytoplasm is critical. The SOS1 gene product that serves as an Na⁺-H⁺ antiporter plays such role. Thus, the term "salt stress" refers to a situation in which plants are exposed to the salt conditions that are higher than the salt conditions under which the plants can usually grow for any period of time on any number of occasions. Plants exposed to salt stress would suffer from, for example, growth disorders.

Plants have the 4 types of environmental stress resistance described above. Thus, plants can be resistant to high-temperature stress, low-temperature stress, oxidation stress, high-light stress, dehydration stress, chemical stress, or damage stress and suppress lowering in, for example, the survival rate, the growth, and the yield under the stress.

N-acetylglutamic acid can provide plants with the 4 types of environmental stress resistance described above. As a result, plants can acquire resistance to environmental stress, such as high-temperature stress, low-temperature stress, oxidation stress, high-light stress, dehydration stress, chemical stress, or damage stress. Because of a wide variety of environmental changes, such as dehydration, high light, high temperature, chemicals such as agricultural chemicals, damage, infection, or various foreign substances, a large quantity of active oxygen species significantly exceeding the tolerance of the mechanisms of active oxygen removal may be generated. If plants can suppress oxidation stress exceeding the tolerance of the mechanisms of active oxygen removal due to stress caused by dehydration, high light (plants are exposed to higher light for a longer period of time than the light conditions under which the plants can usually grow), high temperature, low temperature, chemicals such as agricultural chemicals, damage, infection, or various foreign substances that they have been exposed, the influence of such stress may be suppressed.

### 3. Increasing expression of environmental stress-responsive gene

N-acetylglutamic acid can increase the expression of the environmental stress-responsive gene associated with environmental stress resistance of plants and, as a consequence, provide plants with environmental stress resistance.

When environmental stress is high-temperature stress, the expression of the high-temperature stress-responsive gene is increased as the environmental stress-responsive gene in *Arabidopsis thaliana.* Examples of high-temperature stress-responsive genes include a transcription factor HSFA, preferably the HSFA2 gene or the HSP gene encoding a heat shock protein, and more preferably the HSP17.6C gene.

In other plant species, the expression of the *Arabidopsis thaliana* HSFA gene homolog, and preferably the HSFA2 gene homolog and/or the *Arabidopsis thaliana* HSP gene homolog, and preferably the HSP17.6C gene homolog is increased. When a nucleotide sequence of a homolog is to be obtained in various plant species, for example, TBLASTN searches may be performed with the use of the amino acid sequences of the proteins encoded by the genes of *Arabidopsis thaliana* as the query sequences to select the gene exhibiting the highest score as the homolog from among the genes exemplified as homolog candidates. In the case of a hop, for example, the expression of the H1HSFA gene, preferably the HlHSFA2 gene and/or the H1HSP gene, and more preferably the HlHSP17.6C gene is increased. In the case of a rice, for example, the expression of the OsHSFA gene, and preferably the OsHSFA2E gene is increased. Proteins encoded by the homologs of the *Arabidopsis thaliana* HSFA gene and HSFA2 gene in various plant species are collectively referred to as HSFA and HSFA2, respectively. Proteins encoded by the homologs of the *Arabidopsis thaliana* HSP gene and HSP 17.6C gene in various plant species are collectively referred to as HSP and HSP17.6C, respectively.

In the plants to which N-acetylglutamic acid has been applied, the expression levels of such high-temperature stress-responsive genes are increased by at least 1.1 times, preferably 1.2 times, more preferably 1.5 times, and further preferably 1.7 times, relative to the plants to which no N-acetylglutamic acid has been applied.

When environmental stress is oxidation stress, the expression of the oxidation stress-responsive gene is increased as the environmental stress-responsive gene in *Arabidopsis thaliana.* Examples of oxidation stress-responsive genes include a transcription factor ZAT, and preferably ZAT10 or ZAT12.

In other plant species, the expression of the *Arabidopsis thaliana* ZAT gene homolog, and preferably the ZAT10 gene homolog and/or the ZAT12 gene homolog is increased. When a nucleotide sequence of a homolog is to be obtained in various plant species, for example, TBLASTN searches may be performed with the use of the amino acid sequences of the proteins encoded by the genes of *Arabidopsis thaliana* as the query sequences to select the gene exhibiting the highest score as the homolog from among the genes exemplified as homolog candidates. In the case of a hop, for example, the expression of the H1ZAT gene, and preferably the HlZAT20 gene and/or the HlZAT12 gene is increased. In the case of a rice, for example, the expression of the OsZAT gene, and preferably the OsZAT12 gene is increased. Proteins encoded by the homologs of the *Arabidopsis thaliana* ZAT gene, ZAT10 gene, and ZAT12 gene in various plant species are collectively referred to as ZAT, ZAT10, and ZAT12, respectively.

In the plants to which N-acetylglutamic acid has been applied, the expression levels of such high-temperature stress-responsive genes are increased by at least 1.1 times, preferably 1.2 times, more preferably 1.5 times, and further preferably 1.7 times, relative to the plants to which no N-acetylglutamic acid has been applied.

Whether or not the expression of a gene of interest is increased with the aid of N-acetylglutamic acid in a plant can be analyzed by extracting RNA from a plant body, synthesizing cDNA using a reverse transcriptase, and measuring the expression level by real-time PCR. The gene expression increased by N-acetylglutamic acid encompasses both of the cases: a case in which the expression is increased before stress is applied to a plant; and a case in which the expression is increased when stress is applied.

The present invention encompasses a N-acetylglutamic acid-containing composition for increasing the expression of a gene associated with environmental stress resistance, such as a high-temperature stress-responsive gene or an oxidation stress-responsive gene. Specifically, the present invention encompasses a composition for increasing the expression of ZAT, a composition for increasing the expression of HSFA, and a composition for increasing the expression of HSP that contain N-acetylglutamic acid. Such compositions are the same as the compositions used for providing plants with environmental stress resistance.

When plants are treated with N-acetylglutamic acid, the expression of a gene encoding ZAT, and preferably a gene encoding ZAT10 and a gene encoding ZAT12 can be increased. As a result, genes that suppress accumulation of active oxygen species in cells are activated (Davletova et al., Plant Physiol., Oct 2005, 139 [2]: 847-856), plants can be provided with resistance to stress caused by oxidation, dehydration, high light, high temperature, chemicals such as agricultural chemicals, and damage. When plants are treated with N-acetylglutamic acid, the expression of a gene encoding HSFA, preferably a gene encoding HSFA2 and a gene encoding HSP, and more preferably a gene encoding HSP17.6C can be increased. As a result, plants can be provided with resistance to stress caused by high temperature.

Specifically, plants can be provided with environmental stress resistance by treatment thereof with N-acetylglutamic acid through expression of the genes indicated above.

The genes, the expression of which is increased according to the present invention, exhibit identity of, for example, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99%, or 100% to the genes indicated above.

### 4. Epigenetic modification of environmental stress-responsive gene

When plants are treated with N-acetylglutamic acid, epigenetic modification of the environmental stress-responsive gene can be reinforced. Specifically, the present invention encompasses a composition for reinforcing epigenetic modification of a gene associated with environmental stress resistance, such as a high-temperature stress-responsive gene or an oxidation stress-responsive gene and preferably a composition for enhancing histone acetylation or epigenetic modification of an environmental stress resistance gene and preferably encompasses a composition for enhancing histone acetylation of an environmental stress resistance gene. Specifically, the present invention encompasses a N-acetylglutamic acid-containing composition for enhancing histone acetylation of a gene encoding ZAT, and preferably a gene encoding ZAT10 and a gene encoding ZAT12, and a N-acetylglutamic acid-containing composition for enhancing histone acetylation of a gene encoding HSFA, and preferably a gene encoding HSFA2. Such compositions are the same as the compositions used for providing plants with environmental stress resistance. Inheritance, which is transmission of gene expression information, is classified as genetic inheritance that depends on nucleotide sequences or epigenetic inheritance that depends on changes in the state of gene modification independent of nucleotide sequences. Gene modification implemented by epigenetic inheritance is referred to as "epigenetic modification," and DNA methylation and histone acetylation are known as epigenetic modification.

The present invention encompasses a N-acetylglutamic acid-containing composition for increasing the expression of histone acetyltransferase, preferably a N-acetylglutamic acid-containing composition for increasing the expression of histone acetyltransferase that elevates the histone acetylation level of the environmental stress-responsive gene, a N-acetylglutamic acid-containing composition for increasing the expression of histone acetyltransferase HAC, and preferably a N-acetylglutamic acid-containing composition for enhancing the expression of HAC1 and HAC12. When plants are treated with N-acetylglutamic acid, specifically, a gene encoding HAC, and preferably a gene encoding HAC1 and a gene encoding HAC12 can be potentiated. As a result, the histone acetylation level of a stress-responsive gene such as an oxidation stress-responsive gene in cells is increased, the expression level of a stress-responsive gene such as an oxidation stress-responsive gene in cells is increased, and plants are thus provided with resistance to environmental stress. Such compositions are the same as the compositions used for providing plants with environmental stress resistance. It is known that addition of an acetyl group to histone by histone acetylation loosens the chromatin structure and gene expression is positively controlled as a consequence. Histone acetyltransferase (HAT) that adds an acetyl group to histone is known to play a role in such histone acetylation.

Specifically, plants can be provided with environmental stress resistance by treatment thereof with N-acetylglutamic acid through the effects described above. The expression level of the environmental stress-responsive gene is increased by elevating the histone acetylation level or the expression level of histone acetyltransferase.

The genes, the expression of which is increased according to the present invention, exhibit identity of, for example, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99%, or 100% to the genes indicated above.

In the plants to which N-acetylglutamic acid has been applied, histone acetylation of stress-responsive genes, such as a gene encoding ZAT10, a gene encoding ZAT12, and a gene encoding HSFA2, is increased by at least 1.1 times, preferably 1.2 times, more preferably 1.5 times, and further preferably 1.9 times, relative to the plants to which no N-acetylglutamic acid has been applied. All core histones; i.e., histone H2A, histone H2B, histone H3, and histone H4, are acetylated, and acetylation levels of some of such histones may be measured. For example, the acetylation level of histone H4 may be measured. The histone acetylation level can be quantified by, for example, measuring the acetylation level in cells using an antibody that recognizes acetylated histone.

In the plants to which N-acetylglutamic acid has been applied, the expression levels of histone acetyltransferase, such as HAC1 or HAC12, are increased by at least 1.1 times, preferably 1.2 times, and further preferably 1.3 times, relative to the plants to which no N-acetylglutamic acid has been applied.

With the aid of histone acetyltransferase in plants other than *Arabidopsis thaliana,* the expression of a homolog of a gene encoding histone acetyltransferase of *Arabidopsis thaliana* is increased. When a nucleotide sequence of a homolog is to be obtained in various plant species, for example, TBLASTN searches may be performed with the use of the amino acid sequences of the proteins encoded by the genes of histone acetyltransferase of *Arabidopsis thaliana* as the query sequences to select the gene exhibiting the highest score as the homolog from among the genes exemplified as homolog candidates.

Whether or not the expression of a gene of interest is increased with the aid of N-acetylglutamic acid in a plant can be analyzed by extracting RNA from a plant body, synthesizing cDNA using a reverse transcriptase, and measuring the expression level by real-time PCR. The gene expression increased by N-acetylglutamic acid encompasses both of the cases: a case in which the expression is increased before stress is applied to a plant; and a case in which the expression is increased when stress is applied.

### 5. Target plant

In the present invention, target plants are angiosperms and gymnosperms, with angiosperms being preferable. Angiosperms encompass dicotyledonous plants and monocotyledonous plants. Examples of monocotyledonous plants include: plants of *Gramineae,* such as rice, maize, barley, wheat, and sorghum; plants of *Araceae,* such as *colocasia antiquorum* and *Amorphophalus konjak;* plants of *Amaryllidaceae,* such as onions and *Allium fistulosum*; and plants of *Asparagaceae,* such as asparagus. Plants of *Gramineae* are particularly preferable. Examples of dicotyledonous plants include: plants of *Cannabaceae,* such as cannabis, hop, *Aphananthe aspera,* and *Celtis sinensis;* plants of *Brassicaceae,* such as cabbage, Chinese cabbage, broccoli, Japanese radish, *Eruca vesicaria ssp. sativa, Brassica chinensis komatsuna, Brassica rapa var. nipposinica, Brassica juncea,* and *Arabidopsis thaliana;* plants of *Solanaceae,* such as *Solanum tuberosum,* tobacco, *Nicotiana benthamiana,* and tomato; plants of *Compositae,* such as lettuce and artichoke; plants of *Leguminosae,* such as alfalfa and soybean; plants of *Amaranthaceae,* such as spinach and sugarbeet; plants of *Lamiaceae,* such as *Perilla frutescens* and basil; plants of *Umbelliferae,* such as carrot and *Cryptotaenia japonica;* plants of *Cucurbitaceae,* such as melon, watermelon, cucumber, and pumpkin; and plants of *Malvaceae,* such as *Gossypium.* In particular, plants of *Cannabaceae* and plants of *Brassicaceae* are preferable. Tomato is preferably excluded.

### 6. Method of N-acetylglutamic acid application and amount of application thereof

N-acetylglutamic acid may be applied to plants to provide the plants with environmental stress resistance.

N-acetylglutamic acid is applied to plants by bringing N-acetylglutamic acid into contact with plants or introducing N-acetylglutamic acid into plants. For example, plants may be treated with N-acetylglutamic acid or N-acetylglutamic acid may be administered or applied to plants.

N-acetylglutamic acid may be used in a powder or crystal form, it may be dissolved in an adequate solvent, such as water or buffer, it may be mixed with an excipient, or it may be incorporated into a fertilizer, a medium, culture soil, or an agricultural chemical, and the resultant may then be applied to plants. N-acetylglutamic acid can be applied to plants, for example, during culture, hydroponic culture, soil culture, or pot culture. Specifically, N-acetylglutamic acid may be applied to a medium or soil, directly applied to a plant body, or dispersed or sprayed on either the medium or soil and the plant body. When N-acetylglutamic acid is applied to a plant body, for example, it may be applied to plant seeds, seedlings, leaves, or stems by dispersion, spraying, coating, aspersion, or irrigation. In the present invention, N-acetylglutamic acid dissolved in a solvent, N-acetylglutamic acid incorporated into a fertilizer, a medium, culture soil, or an agricultural chemical, or N-acetylglutamic acid mixed with an excipient is referred to as a N-acetylglutamic acid-containing composition. Such composition can be used in the form of, for example, an emulsion, a liquid, a water-soluble agent, a powder, a dusting powder, a paste, a granule, or a hydrated agent. When the composition is applied to plants by dispersion or spraying, a sprayer or spreader may be used. In the case of large-scale dispersion in a large farm, the composition may be aerially spreaded using a helicopter or drone.

The timing of N-acetylglutamic acid application is not limited, and it may be before, during, or after exposure to environmental stress. In order to provide plants with stress resistance in advance, N-acetylglutamic acid is preferably applied to plants before or during exposure to environmental stress. Application before exposure to environmental stress is particularly preferable.

When plants are predicted to be exposed to high-temperature stress, low-temperature stress, dehydration stress, or the like based on the weather forecast, for example, N-acetylglutamic acid may be applied to plants in advance. When plants are exposed to high-temperature stress, low-temperature stress, dehydration stress, or the like due to rapid changes in weather, N-acetylglutamic acid may be applied to plants immediately. When plants are exposed to high-temperature stress, low-temperature stress, dehydration stress, or the like, the plants are exposed to oxidation stress simultaneously. When plants are predicted to be exposed to high-temperature stress, low-temperature stress, dehydration stress, or the like and N-acetylglutamic acid is to be applied to the plants, accordingly, plants can be provided with oxidation stress resistance.

N-acetylglutamic acid may be applied continuously or intermittently. When N-acetylglutamic acid is applied continuously, for example, culture or hydroponic culture is performed in a medium supplemented with N-acetylglutamic acid for a given period of time, or culture is performed in soil with the use of a tool that can continuously supply N-acetylglutamic acid. When N-acetylglutamic acid is applied intermittently, for example, N-acetylglutamic acid is applied appropriately in accordance with a timing or an extent of predicted stress in the case of culture or hydroponic culture. In the case of soil culture, N-acetylglutamic acid may be applied appropriately in accordance with the moisture conditions of soil and a predicted timing or an extent of stress. In the case of continuous application, a duration of application is not limited. For example, application may be continued until causes of stress are eliminated. In the case of intermittent application, in addition, the frequency or amount of application is not limited. For example, application may be continued until causes of stress are eliminated. After continuous application is terminated, application may be performed again.

Concentration of N-acetylglutamic acid in a N-acetylglutamic acid-containing composition is not limited, and the composition can be applied, so that the required amount of N-acetylglutamic acid described below would be applied to plants.

The amount of N-acetylglutamic acid application can be adequately regulated in accordance with a plant type, an extent of growth, and an extent of stress.

The amount of application is exemplified below. N-acetylglutamic acid can be applied at concentration of, for example, 0.001 to 1000000 µM, preferably 0.01 to 100000 µM, 0.1 to 10000 µM, 1 to 1000 µM, or 10 to 1000 µM based on the medium volume or soil volume. When N-acetylglutamic acid is applied to soil, in particular, N-acetylglutamic acid can be applied in an amount of, for example, 0.01 to 10000 mmol/m², preferably 0.1 to 1000 mmol/m², 0.5 to 100 mmol/m², 1 to 50 mmol/m², or 0.01 to 10000 mmol/m², per instance based on the soil area. N-acetylglutamic acid can be applied at, for example, 0.001 to 10000 µMol, preferably 0.001 to 10000 µMol, 0.01 to 1000 µMol, 0.1 to 100 µMol, or 1 to 100 µMol per instance to a plant.

### 7. Method for verifying provision of stress resistance

Whether or not plants have acquired environmental stress resistance through N-acetylglutamic acid application can be verified by exposing the plants to which N-acetylglutamic acid has been applied to environmental stress and visually inspecting an extent of leaf chlorosis, measuring the fresh weight of the aboveground part excluding plant seeds and roots, or measuring the chlorophyll content in the plants.

When the environmental stress is high-temperature stress, for example, plants to which N-acetylglutamic acid has been applied are allowed to stand at a high temperature of 30°C to 50°C for 60 minutes to several weeks. Thereafter, an extent of leaf chlorosis is visually inspected, the fresh weight of the aboveground part excluding plant seeds and roots is measured, or the chlorophyll content in the plants is measured, so as to verify the stress resistance. The temperature and the duration of high-temperature stress application can be adequately determined in accordance with plant species. The chlorophyll content can be quantified in accordance with, for example, the method of Yamaguchi et al. (Nature Commun., Jun 9, 2021, 12 [1]: 3480). In this case, the plants subjected to treatment may be compared with the plants not subjected to high temperature treatment or plants to which no N-acetylglutamic acid has been applied. If the plants of interest exhibit a lower extent of chlorosis, a smaller decrease in the fresh weight, or a smaller decrease in the chlorophyll content, compared with the plants to which no N-acetylglutamic acid has been applied, the plants of interest can be determined to have acquired high-temperature stress resistance.

When the environmental stress is oxidation stress, for example, plants to which N-acetylglutamic acid has been applied are treated with an oxidation stress inducer, such as methyl viologen, and allowed to stand for several days. Thereafter, an extent of leaf chlorosis is visually inspected, the fresh weight of the aboveground part excluding plant seeds and roots is measured, or the chlorophyll content in the plants is measured, so as to verify the stress resistance. The concentration of methyl viologen and the duration of treatment can be adequately determined in accordance with plant species. In this case, the plants subjected to treatment may be compared with the plants without treatment with an oxidation stress inducer or plants to which no N-acetylglutamic acid has been applied. If the plants of interest exhibit a lower extent of chlorosis, a smaller decrease in the fresh weight, or a smaller decrease in the chlorophyll content, compared with the plants to which no N-acetylglutamic acid has been applied, the plants of interest can be determined to have acquired oxidation stress resistance.

Whether or not plants have acquired environmental stress resistance through N-acetylglutamic acid application can be verified by exposing the plants to which N-acetylglutamic acid has been applied to environmental stress, and measuring the expression level of the environmental stress-responsive gene in the plants. Examples of environmental stress-responsive genes include the gene encoding HSFA, the gene encoding HSP, and the gene encoding ZAT described in the "3. Increasing expression of environmental stress-responsive gene" section above. When the expression levels of such genes are increased, the plants of interest can be determined to have acquired environmental stress resistance. When the expression levels of the gene encoding HSFA and of the gene encoding HSP are selectively increased, the plants of interest can be determined to have acquired high-temperature stress resistance. When the expression of the gene encoding ZAT is selectively increased, the plants of interest can be determined to have acquired oxidation stress resistance.

### 8. Method for verifying plant growth enhancement

Whether or not plants to which N-acetylglutamic acid has been applied have acquired the effects of growth enhancement can be verified by applying N-acetylglutamic acid to plants, and measuring the fresh weight of the aboveground part excluding plant seeds and roots. The effects of growth enhancement can be also verified by measuring, for example, the number of leaves, the plant length, the leaf color, and the chlorophyll content.

### Examples

The present invention is described in greater detail with reference to the following examples, although the present invention is not limited to these examples.

### Example 1: Enhancement of high-temperature stress resistance by N-acetylglutamic acid in Arabidopsis thaliana

### 1. Objective

In plants, high-temperature stress inhibits healthy growth through, for example, protein denaturation or cell membrane breakdown. Accordingly, a technique of enhancing high-temperature stress resistance of a plant is necessary to realize stable plant growth at high temperatures or to resist a rapid temperature increase. As a method for enhancing high-temperature stress resistance of a plant, a method for producing a plant that overexpresses a high-temperature stress-responsive gene inherent to a plant is available. However, such method is problematic in terms of, for example, the need for transformation and inhibited normal growth. In recent years, a method for enhancing stress resistance through treatment with a low-molecular-weight compound in which the stress is not limited to high-temperature stress has been reported. This method does not necessitate transformation and is accordingly high in versatility. Enhanced stress resistance can be expected in various plant species. In order to search for a compound that would enhance high-temperature stress resistance of a plant, a possibility of an amino acid species; i.e., N-acetylglutamic acid, for enhancing high-temperature stress resistance was examined using a model plant *Arabidopsis thaliana* as a material.

### 2. Method of experimentation

### (1) Experimental materials

A wild-type *Arabidopsis thaliana* strain (accession: Col-0) was used as an experimental material. Seeds were purchased from Inplanta Innovations Inc. (https://www.inplanta.jp/).

### (2) Method of growing

A liquid medium containing a 1/2 Murashige and Skoog Plant Salt Mixture (Nacalai) and 1 (w/v)% sucrose (FUJIFILM Wako) was used as a growth medium.

*Arabidopsis thaliana* seeds were sterilized with the use of a Kitchen Haiter^{®} liquid (bleach for kitchen available from Kao Corporation) diluted to one-half concentration with distilled water for 3 minutes, washed 3 times with sterile distilled water, and then incubated at 4°C overnight. The growth medium was dispensed at 1 ml/well on a 24-well microplate (IWAKI), 3 grains of the seeds were inoculated in each well, and the plate was transferred to the incubator (TOMY) to initiate growing. The incubator was maintained at a temperature of 22°C for a daily cycle of 16 hours light and 8 hours darkness.

### (3) High-temperature treatment and chlorophyll content quantification

Before high-temperature treatment, a stock solution of N-acetylglutamic acid (Tokyo Chemical Industry Co., Ltd.) was added to *Arabidopsis thaliana* 7 days after seeding to the final concentration of 0, 0.01, 0.05, and 0.1 mM in the media, followed by incubation for 2 hours. Sterile distilled water was used as a solvent for the stock solution of N-acetylglutamic acid.

High-temperature treatment was performed with the use of an incubator. The plate was transferred to an incubator maintained at 44°C, incubated for 60 minutes to perform high-temperature treatment, and cultured in an incubator maintained at 22°C for 3 days.

Plants are known to lose the green pigment chlorophyll from tissue such as leaves upon high-temperature stress exposure and become chlorotic as a consequence. Accordingly, the chlorophyll content was quantified after the high-temperature treatment to evaluate activity of N-acetylglutamic acid to enhance high-temperature stress resistance. The chlorophyll content was quantified in accordance with the method of Yamaguchi et al. (Nature Commun., Jun 9, 2021, 12 [1]: 3480). To the collected plants, N,N-dimethylformamide (FUJIFILM Wako) was added at 1 ml/well, and incubation was performed at 4°C in the dark overnight to extract the chlorophyll. Thereafter, the absorbance of the chlorophyll extract was measured at 647 nm (A647) and 664 nm (A664), respectively, using a micro spectrophotometer (NanoPhotometer, Implen), and the chlorophyll content was calculated in accordance with the formula: 19.43 × A647 + 8.05 × A664. The plant weight in a group subjected to the high-temperature treatment was different from that in a group not subjected to the treatment, and such difference would influence the results of calculation of the chlorophyll content. Thus, the chlorophyll content was calculated on a fresh weight basis to compare the chlorophyll content among samples.

### 3. Results

The results are shown in Figure 1. Under general growth conditions, plants became chlorotic as a result of the high-temperature treatment at 44°C. When 0.05 mM N-acetylglutamic acid and 0.1 mM N-acetylglutamic acid were added, in contrast, chlorosis of plants caused by the high-temperature treatment was suppressed (Figure 1A). As a result of quantification of the chlorophyll content in plants, the chlorophyll content of plants to which 0.05 mM N-acetylglutamic acid and 0.1 mM N-acetylglutamic acid had been applied was found to be significantly higher in the group subjected to the high-temperature treatment, compared with that in the group not subjected to the treatment (Figure 1B).

### 4. Conclusion

N-acetylglutamic acid was found to suppress leaf chlorosis caused by the high-temperature treatment in *Arabidopsis thaliana.* This indicates that N-acetylglutamic acid would provide plants with high-temperature stress resistance.

### Example 2: Verification of provision of high-temperature stress resistance by N-acetylglutamic acid by pot culture of Arabidopsis thaliana

### 1. Objective

Whether or not effects of N-acetylglutamic acid for providing a plant with high-temperature stress resistance observed by liquid culture of *Arabidopsis thaliana* would be observed by pot culture was examined.

### 2. Method of experimentation

### (1) Experimental materials

The materials as used in Example 1 were used.

### (2) Method of growing

Jiffy-7 (42 mm diameter, Sakata Seed Corporation) was used as culture soil for pot culture. On Jiffy-7 prepared on the Disposable Tray DT-3 (AS ONE CORPORATION), a grain of *Arabidopsis thaliana* seeds was seeded and the plant was allowed to grow in an artificial climate chamber (Nippon Medical & Chemical Instruments Co., Ltd.) maintained at a temperature of 22°C for a daily cycle of 16 hours light and 8 hours darkness.

### (3) N-acetylglutamic acid treatment and high-temperature treatment

On the third week after seeding, tap water (200 ml) containing 0.5 mM N-acetylglutamic acid was poured on the Disposable Tray. On the fourth week after seeding, the tray was transferred to an artificial climate chamber maintained at a temperature of 37°C and subjected to the high-temperature treatment. When the tray was dried during the high-temperature treatment, tap water containing 0.5 mM N-acetylglutamic acid was added. The tray was removed from the artificial climate chamber 5 days after the initiation of the high-temperature treatment, and the weight of the aboveground part was measured.

### 3. Results

In the group to which N-acetylglutamic acid had been applied, the fresh weight was increased by 1.3 times relative to the control group (Figure 2A and Figure 2B).

### 4. Conclusion

N-acetylglutamic acid was found to exert the activity of enhancing high-temperature stress resistance on *Arabidopsis thaliana* in pot culture as observed in liquid culture.

### Example 3: Verification of provision of high-temperature stress resistance by N-acetylglutamic acid in rice

### 1. Objective

Whether or not effects of N-acetylglutamic acid for enhancing high-temperature stress resistance observed in dicotyledonous plants; i.e., *Arabidopsis thaliana* and tobacco plants, would be observed in monocotyledonous plants was examined using rice materials.

### 2. Method of experimentation

### (1) Experimental materials

A wild-type rice strain (the variety: Nipponbare) was used as an experimental material. Seeds were purchased from Nouken (https://nouken-seed.shop-pro.jp/).

### (2) Method of growing

A liquid medium consisting of a 1/2 Murashige and Skoog Plant Salt Mixture (Nacalai) was used as a growth medium.

With the use of a 50-ml Falcon tube, rice seeds were sterilized for 30 minutes with the use of a Kitchen Haiter^{®} liquid (Kao Corporation) diluted to one-half concentration with distilled water for 30 minutes and washed 5 times with sterile distilled water. The tube was laid down, sterile distilled water was introduced thereinto in an amount that would sufficiently soak the washed seeds, and culture was performed in an incubator for 3 days to germinate the seeds. The incubator was maintained at a temperature of 30°C for a daily cycle of 16 hours light and 8 hours darkness.

The growth medium was dispensed at 3 ml/well on a 12-well microplate (IWAKI) 3 days after the initiation of incubation, 3 grains of the germinated seeds were inoculated in each well, and the resultants were handled as experimental materials.

### (3) High-temperature treatment and chlorophyll content quantification

Before high-temperature treatment, a stock solution of N-acetylglutamic acid was applied to rice to the final concentration of 0.5 mM in the medium, followed by incubation for 24 hours.

High-temperature treatment was performed with the use of an incubator. The plate was transferred to an incubator maintained at 44°C and incubated for 3 hours. Thereafter, the plate was incubated in an incubator maintained at 22°C for 3 days, plants were collected, and the fresh weight of the aboveground part excluding seeds and roots was quantified.

### 3. Results

The results are shown in Figure 3. In comparison with the normal growth conditions, a decrease in the fresh weight of the aboveground part of rice caused by high-temperature treatment was suppressed to a significant extent in a group to which N-acetylglutamic acid had been applied (Figure 3A and Figure 3B).

### 4. Conclusion

N-acetylglutamic acid was found to suppress a decrease in the fresh weight caused by the high-temperature treatment in rice. This indicates that N-acetylglutamic acid would provide monocotyledonous plants with high-temperature stress resistance.

### Example 4: Enhancement of high-temperature stress resistance by N-acetylglutamic acid in hop 1. Objective

A hop is a perennial, climbing plant of the genus *Humulus,* the family *Cannabaceae,* and female flowers thereof containing various aroma constituents are essential raw materials for beer brewing. A hop plant prefers a cold climate, and the yield and the quality thereof are deteriorated at high temperatures (Donner et al., Plant Soil and Environment, 66, 2020 [1]: 41-46). Accordingly, a technique of enhancing high temperature resistance of a hop is awaited as countermeasures against advancing global warming in recent years. Therefore, whether or not effects of N-acetylglutamic acid for enhancing high-temperature stress resistance would be observed in a hop was examined.

### 2. Method of experimentation

### (1) Experimental materials

A hop strain (the variety: Saaz) was used as an experimental material. Hop seedlings were purchased from Hananoyakata (http://hananoyakata.shop-projp).

### (2) Methods for preparing and growing tissue-cultured seedlings

Tissue-cultured seedlings required for evaluation of high temperature response of a hop were prepared in a laboratory. A stem fragment including a node was removed from a Saaz seedling as an explant and incubated with 70 (v/v)% ethanol (FUJIFILM Wako) for 1 minute and with 1 (v/v)% sodium hypochlorite (FUJIFILM Wako) for 5 minutes for sterilization. The explant was washed with sterile water for 1 minute, washing was repeated 3 times, moisture was removed therefrom with a paper towel, the explant was inoculated in an agar medium containing a 1/2 Murashige and Skoog Plant Salt Mixture, 2 (w/v)% glucose, and 0.2 (w/v)% gellan gum (FUJIFILM Wako), and culture was initiated in an incubator. The incubator was maintained at a temperature of 20°C for a daily cycle of 16 hours light and 8 hours darkness. Two weeks after the initiation of culture, axillary buds extending from the nodes were cut and inoculated into an agar medium, and the sufficiently grown seedlings were designated as "tissue-cultured seedlings." Tissue-cultured seedlings were subcultured by inoculating apical buds into fresh agar media every 1.5 months. The agar medium used for subculture was composed of a 1/2 Murashige and Skoog Plant Salt Mixture, 2 (w/v)% glucose, and 0.8 (w/v)% agar (Ina Food Industry Co., Ltd.).

### (3) High-temperature treatment

Apical buds were cut from the tissue-cultured seedlings 1.5 months after the initiation of subculture, transferred to an agar medium containing 0.1 mM N-acetylglutamic acid, and then pre-cultured in an incubator maintained at 20°C for 7 days. Thereafter, the sample was transferred to an incubator maintained at 30°C, and high-temperature stress application was continued for 2 weeks.

### 3. Results

The results are shown in Figure 4. In the group to which N-acetylglutamic acid had been applied, a decrease in the fresh weight of the aboveground part of a hop caused by the high-temperature treatment was suppressed, compared with the control group. In the group subjected to N-acetylglutamic acid treatment, specifically, the fresh weight was increased by 1.8 times relative to the group not subjected to the treatment (Figure 4A and Figure 4B).

### 4. Conclusion

N-acetylglutamic acid was found to suppress a decrease in the fresh weight caused by the high-temperature treatment in a hop. This indicates that N-acetylglutamic acid would provide plants with high-temperature stress resistance.

### Example 5: Increasing expression of high-temperature stress-responsive gene by N-acetylglutamic acid in Arabidopsis thaliana

### 1. Objective

In response to high-temperature stress, a wide variety of genes are activated in plants, so as to remove growth inhibiting factors, such as protein denaturation or cell membrane breakdown (Ohama et al., Trends Plant Sci., Jan, 2017 ; 22[1]: 53-65). When *Arabidopsis thaliana* is exposed to high-temperature stress, a transcription factor HSFA2 plays a key role in gene expression control and activates many genes, so as to maintain intracellular homeostasis by, for example, suppressing protein denaturation (Lamke et al., Transcription, Aug 7, 2016, 7[4]: 111-4). Also, an *Arabidopsis thaliana* variant lacking a heat shock protein HSP 17.6C that plays a role in suppression of high-temperature stress-induced protein denaturation is known to have high-temperature resistance that is lower than that of wild-type strains (Yamaguchi et al., Nat. Commun., Jun 9, 2021, 12[1]: 3480). Accordingly, whether or not N-acetylglutamic acid would increase the expression of HSFA2 and that of HSP17.6C as an effect of enhancing high-temperature stress resistance was examined.

### 2. Method of experimentation

### (1) Experimental materials

The materials as used in Example 1 were used.

### (2) Method of growing

The method as employed in Example 1 was employed.

### (3) N-acetylglutamic acid treatment and RNA extraction

N-acetylglutamic acid was applied to *Arabidopsis thaliana* 7 days after inoculation to the final concentration of 0.1 mM in the medium, followed by incubation for 2 hours or 6 hours. The incubator was maintained at a temperature of 22°C for a daily cycle of 16 hours light and 8 hours darkness. After incubation, the samples were frozen with liquid nitrogen, and RNA was extracted using the RNeasy Plant Mini Kit (Thermo Fischer Scientific).

### (4) Analysis of expression level of high-temperature-responsive gene by real-time PCR

cDNA that would be necessary as a real-time PCR template was synthesized from the RNA obtained. 500 ng total RNA was used for each sample, and cDNA was synthesized using the Verso cDNA Synthesis Kit (Thermo Fischer Scientific). The synthesized cDNA was diluted to 5-fold with sterile distilled water and subjected to real-time PCR. For real-time PCR, a reaction solution containing HSFA2 (AGI code: AT2G26150) and HSP17.6C (AGI code: AT1G53540) as the target genes, ACTIN2 (AGI code: AT3G18780) as the reference gene, and TB Green Ex Taq II (TaKaRa) was prepared. PCR was performed with the use of the LightCycler^{®} 480 System (Roche) with the number of amplification cycles of 50. The primers shown below were used.
HSFA2
   Fw: ATCAGCAAGGATCTGGGATG (SEQ ID NO: 1)
   Rv: CCTCAGCTACAAGCACACCA (SEQ ID NO: 2)
HSP17.6C
   Fw: CAAAACAGAGCAAACGCAAA (SEQ ID NO: 3)
   Rv: AACGCATCGAAAACATCCAG (SEQ ID NO: 4)
ACTIN2
   Fw: GATCTCCAAGGCCGAGTATGAT (SEQ ID NO: 5)
   Rv: CCCATTCATAAAACCCCAGC (SEQ ID NO: 6)

Thereafter, the relative expression level of the target genes upon N-acetylglutamic acid treatment were calculated by the ΔΔCt method using the Cp values obtained by real-time PCR.

### 3. Results

The results are shown in Figure 5. The HSFA2 expression level was increased by 2.5 times 2 hours after N-acetylglutamic acid application, compared with the group not subjected to the treatment (Figure 5A). The HSP17.6C expression level was increased by 1.2 times 6 hours after N-acetylglutamic acid application, compared with the control group (Figure 5B).

### 4. Conclusion

The results indicate that N-acetylglutamic acid would increase the expression of the high-temperature stress-responsive gene in *Arabidopsis thaliana* to thereby enhance high-temperature stress resistance.

### Example 6: Increasing expression of high-temperature stress-responsive gene by N-acetylglutamic acid in rice

### 1. Objective

Whether or not effects of N-acetylglutamic acid for increasing the expression of the high-temperature stress-responsive gene HSFA2 observed in *Arabidopsis thaliana* would be observed in rice was examined.

### 2. Method of experimentation

In order to design primers for the target genes necessary for gene expression analysis by real-time PCR, homologs of *Arabidopsis thaliana* high-temperature-responsive genes in rice were searched for. The amino acid sequence of *Arabidopsis thaliana* HSFA2 (AGI code: AT2G26150) was obtained from TAIR (https://www.arabidopsis.org/), and the nucleotide sequence of the homolog was obtained using RAP-DB (https://rapdb.dna.affrc.go.jp/). As a reference gene, the nucleotide sequence of the homolog of *Arabidopsis thaliana* ACTIN2 (AGI code: AT3G18780) was also obtained. Homolog genes in rice were designated as OsHSFA2E and OsACT1, respectively.

### (1) Experimental materials

The materials as used in Example 3 were used.

### (2) Method of growing

The method as employed in Example 3 was employed.

### (3) N-acetylglutamic acid treatment and RNA extraction

The rice samples subjected to germination for 3 days were inoculated into a liquid medium consisting of a 1/2 Murashige and Skoog Plant Salt Mixture. Specifically, a liquid medium was dispensed at 3 ml/well to a 12-well microplate (IWAKI), and 3 samples were transferred to each well. N-acetylglutamic acid was applied to each well to the final concentration of 0.5 mM in the medium, incubation was performed at 30°C for 2 hours, and RNA was extracted from the aboveground part using the RNeasy Plant Mini Kit.

### (4) Analysis of expression level of high-temperature-responsive gene by real-time PCR

cDNA that would be necessary as a real-time PCR template was synthesized from the RNA obtained. 1000 ng total RNA was used for each sample, and cDNA was synthesized using the Verso cDNA Synthesis Kit. The synthesized cDNA was diluted to 5-fold with sterile distilled water and subjected to real-time PCR. For real-time PCR, a reaction solution containing OsHSFA2E as the target gene, OsACT1 as the reference gene, and TB Green Ex Taq II was prepared. PCR was performed with the use of the LightCycler^{®} 480 System (Roche) with the number of amplification cycles of 50. The primers shown below were used.
OsHSFA2E
   Fw: CACAAAGTCAGACCTGCAAGC (SEQ ID NO: 7)
   Rv: ATGCCATCATGTGCTGTTGC (SEQ ID NO: 8)
OsACT1
   Fw: AGCACATTCCAGCAGATGTG (SEQ ID NO: 9)
   Rv: TTCCTGTGCACAATGGATGG (SEQ ID NO: 10)

Thereafter, the relative expression level of the target gene upon N-acetylglutamic acid treatment was calculated by the ΔΔCt method.

### 3. Results

The results are shown in Figure 6. The OsHSFA2E expression level was increased by 1.4 times upon N-acetylglutamic acid treatment, compared with the control.

### 4. Conclusion

The results indicate that N-acetylglutamic acid would increase the expression of the high-temperature stress-responsive gene in rice to thereby enhance high-temperature stress resistance.

### Example 7: Increasing expression of high-temperature stress-responsive gene by N-acetylglutamic acid in hop

### 1. Objective

Whether or not effects of N-acetylglutamic acid for increasing the expression of high-temperature stress-responsive genes HSFA2 and HSP17.6C observed in *Arabidopsis thaliana* would be observed in hop was examined.

### 2. Method of experimentation

### Searching for homolog of Arabidopsis thaliana high-temperature-responsive gene in hop

In order to design primers for the target genes necessary for gene expression analysis by real-time PCR, homologs of *Arabidopsis thaliana* high-temperature-responsive genes in hop were searched for. The amino acid sequences of *Arabidopsis thaliana* HSFA2 (AGI code: AT2G26150) and HSP17.6C (AGI code: AT1G53540) were obtained from TAIR (https://www.arabidopsis.org/), and the nucleotide sequences of the gene homologs were obtained using Hopbase (https://hopbase.cgrb.oregonstate.edu/). When obtaining the nucleotide sequences of homologs, TBLASTN searches were performed with the use of the amino acid sequence of *Arabidopsis thaliana* as the query sequences to select the gene exhibiting the highest score as the hop homolog from among the genes exemplified as homolog candidates. As the reference gene, the nucleotide sequence of the homolog of *Arabidopsis thaliana* EF1α (AGI code: AT1G18070) was obtained. The hop homolog genes were designated as H1HSFA2, HlHSP17.6C, and HlEF1α, respectively.

### (1) Experimental materials

The materials as used in Example 4 were used.

### (2) Methods for preparing and growing tissue-cultured seedlings

The methods as employed in Example 4 were employed.

### (3) N-acetylglutamic acid treatment and RNA extraction

The leaves in the first and the second nodes from the apical buds of the tissue-cultured seedlings were sampled 1.5 months after the initiation of subculture and inoculated into a liquid medium consisting of a 1/2 Murashige and Skoog Plant Salt Mixture and 2 (w/v)% glucose. Specifically, a liquid medium was dispensed at 5 ml/well to a 6-well microplate (IWAKI), and 5 hop leaves were mounted thereon. N-acetylglutamic acid was applied to each well to the final concentration of 1 mM in the medium, incubation was performed at 20°C for 2 hours, and RNA was extracted from the leaves using the RNeasy Plant Mini Kit.

### (4) Analysis of expression level of high-temperature-responsive gene by real-time PCR

cDNA that would be necessary as a real-time PCR template was synthesized from the RNA obtained. 1000 ng total RNA was used for each sample, and cDNA was synthesized using the Verso cDNA Synthesis Kit. The synthesized cDNA was diluted to 5-fold with sterile distilled water and subjected to real-time PCR. For real-time PCR, a reaction solution containing HlHSFA2 and HlHSP17.6C as the target genes, HlEF1α as the reference gene, and TB Green Ex Taq II was prepared. PCR was performed with the use of the LightCycler^{®} 480 System (Roche) with the number of amplification cycles of 50. The primers shown below were used.
HlHSFA2
   Fw: TCGCGAACAAAGGGTTTCAG (SEQ ID NO: 11)
   Rv: ACCGGATTTTGCAGAATCGG (SEQ ID NO: 12)
HlHSP17.6C
   Fw: TGCTCGCATTGACTGGAAAG (SEQ ID NO: 13)
   Rv: TTGTCCTCCTTCTCCACATTCC (SEQ ID NO: 14)
HlEF1α
   Fw: TTTTGCTGTCAGGGACATGC (SEQ ID NO: 15)
   Rv: TTGGCAGCGGATTTGGTAAC (SEQ ID NO: 16)

Thereafter, the relative expression level of the target gene upon N-acetylglutamic acid treatment was calculated by the ΔΔCt method.

### 3. Results

The results are shown in Figure 7. The HlHSFA2 expression level (Figure 7A) and the HlHSP17.6C expression level (Figure 7B) were increased by 1.7 times and 1.8 times, respectively, upon N-acetylglutamic acid treatment, compared with the control.

### 4. Conclusion

The results indicate that N-acetylglutamic acid would increase the expression of the high-temperature stress-responsive gene in a hop to thereby enhance high-temperature stress resistance.

### Example 8: Enhancement of oxidation stress resistance by N-acetylglutamic acid in Arabidopsis thaliana

### 1. Objective

Oxidation stress inhibits healthy growth of a plant through, for example, generation of active oxygen species in chloroplasts or induction of mitochondrial cell death. Since oxidation stress is induced by a wide variety of environmental stresses including high temperature, dehydration, and low temperature stresses, oxidation stress resistance is very critical for a plant to keep growing in a changing environment. As a method for enhancing oxidation stress resistance of a plant, a method for producing a plant that overexpresses an oxidation stress-responsive gene inherent to a plant is available. However, such method is low in versatility because of the need for transformation. Meanwhile, a method for enhancing stress resistance through treatment with a low-molecular-weight compound in which the stress is not limited to oxidation stress has been reported in recent years. This method does not necessitate transformation and is accordingly high in versatility. Enhanced stress resistance can be expected in various plant species. In order to search for a compound that would enhance oxidation stress resistance of a plant, a possibility of an amino acid species; i.e., N-acetylglutamic acid, for enhancing oxidation stress resistance was examined using a model plant *Arabidopsis thaliana* as a material.

### 2. Method of experimentation

### (1) Experimental materials

A wild-type *Arabidopsis thaliana* strain (accession: Col-0) was used as an experimental material. Seeds were purchased from Inplanta Innovations Inc.

### (2) Growth medium

A Murashige and Skoog Plant Salt Mixture 2.2 g (Nacalai tesque) and sucrose 10 g (FUJIFILM Wako) were dissolved in 1 l of pure water, a pH was adjusted to 5.8, and the resultant was sterilized in an autoclave (121°C, 20 minutes).

### (3) Growth conditions and oxidation stress application

*Arabidopsis thaliana* seeds were sterilized by incubation with the use of a Kitchen Haiter^{®} (Kao Corporation) diluted to 2-fold with pure water for 3 minutes. After the seeds were washed with sterile water 3 times, the seeds soaked in sterile water were incubated at 4°C in the dark for 1 day in order to germinate the seeds at the same time.

The growth medium was dispensed at 3 ml/well to the sterilized 12-well microplate (IWAKI), and the seeds that have been incubated at 4°C in the dark for 1 day were seeded at 5 grains/well. The microplate was transferred to an incubator maintained at 22°C (16 hours light and 8 hours darkness) to grow *Arabidopsis thaliana* at 22°C for 7 days.

After *Arabidopsis thaliana* was grown for 7 days, N-acetylglutamic acid (Tokyo Chemical Industry Co., Ltd.) was added to the growth media to the final concentration of 0, 0.01, 0.1, and 0.4 mM, respectively. Sterile water was added to a group not supplemented with amino acid in an amount equivalent to that of N-acetylglutamic acid. As an oxidation stress inducer, methyl viologen (MV, Sigma Aldrich), was added to the final concentration of 5 µM to grow *Arabidopsis thaliana* for an additional 2 days.

Leaf chlorosis is observed in plants upon oxidation stress exposure. Thus, an extent of chlorosis was evaluated by measuring the content of the green pigment chlorophyll in leaves. The chlorophyll content was quantified in accordance with the method of Yamaguchi et al. (Nature Commun., Jun 9, 2021; 12 [1]: 3480). Plants in a well were transferred to a 2-ml tube containing 1.5 ml of N,N-dimethylformamide (FUJIFILM Wako) and incubated at 4°C in the dark for 1 day to extract the chlorophyll. The absorbance of the extract was measured at 647 nm and 664 nm, respectively, to calculate the chlorophyll content. The chlorophyll content was calculated in accordance with the formula: 19.43 × A647 + 8.05 × A664. The calculated value was divided by the plant weight per well, so as to eliminate the influence of individual sizes.

### 3. Results

The results are shown in Figure 8. In MV-treated groups, some leaves of the control group became chlorotic while substantially no leaf chlorosis was observed in the group treated with 0.4 mM N-acetylglutamic acid (Figure 8A). In addition, the chlorophyll content of the MV-treated groups was increased as the N-acetylglutamic acid concentration was increased (Figure 8B).

### 4. Conclusion

N-acetylglutamic acid was found to suppress leaf chlorosis caused by oxidation stress in *Arabidopsis thaliana.* This indicates that N-acetylglutamic acid would provide plants with oxidation stress resistance.

### Example 9: Enhancement of oxidation stress resistance by N-acetylglutamic acid in rice

### 1. Objective

Whether or not effects of N-acetylglutamic acid for providing oxidation stress resistance observed in dicotyledonous plants, *Arabidopsis thaliana,* would be observed in monocotyledonous plants was examined using rice materials.

### 2. Method of experimentation

### (1) Plant materials

A rice strain (the variety: Nipponbare) was used as an experimental material. Rice seeds were purchased from Nouken.

### (2) Growth medium

A Murashige and Skoog Plant Salt Mixture (2.2 g) was dissolved in 1 l of pure water, a pH was adjusted to 5.8, and the resultant was autoclaved (121°C, 20 minutes).

### (3) Growth conditions and oxidation stress application

Seeds were sterilized by incubation with the use of a Kitchen Haiter^{®} diluted to 2-fold with pure water for 20 minutes. The sterilized seeds were washed 3 times with sterile water, 30 grains of seeds were soaked in a 50-ml conical tube (Falcon) containing 10 ml of sterile water, and the seeds were cultured in an incubator maintained at 30°C (16 hours light and 8 hours darkness) for 3 days to germinate the seeds.

After the seeds were incubated for 3 days, the growth medium was dispensed at 3 ml/well to the sterilized 12-well microplate (IWAKI), and the germinated seeds were seeded at 3 grains/well. To each well, 0.5 mM N-acetylglutamic acid or an equivalent amount of sterile water was added, and the seeds were incubated at 30°C for 1 day. Thereafter, an oxidation stress inducer, methyl viologen (MV), was added to the final concentration of 2.5 µM and the plants were grown at 30°C for an additional 3 days.

Leaf chlorosis is observed in plants upon oxidation stress exposure. Thus, an extent of chlorosis was evaluated by measuring the content of the green pigment chlorophyll in leaves. The second leaf (fresh weight: about 8 to 2 mg) was sampled from the underground part, plants in a well were transferred to a 1.5-ml tube containing 1 ml of N,N-dimethylformamide and incubated at 4°C in the dark for 1 day to extract the chlorophyll. The chlorophyll content was calculated in the same manner as in Example 1.

### 3. Results

The results are shown in Figure 9. In MV-treated groups, some leaves of the control group became chlorotic while substantially no leaf chlorosis was observed in the group subjected to N-acetylglutamic acid treatment (Figure 9A). In addition, the chlorophyll content of the MV-treated groups was increased as a result of N-acetylglutamic acid treatment (Figure 9B).

### 4. Conclusion

N-acetylglutamic acid was found to suppress leaf chlorosis caused by oxidation stress in rice. This indicates that N-acetylglutamic acid would provide monocotyledonous plants with oxidation stress resistance.

### Example 10: Enhancement of oxidation stress resistance by N-acetylglutamic acid in hop

### 1. Objective

A hop is a perennial, climbing plant of the genus *Humulus,* the family *Cannabaceae,* and female flowers thereof containing various aroma constituents are essential raw materials for beer brewing. A hop plant prefers a cold climate, and the yield and the quality thereof are deteriorated at high temperatures. Accordingly, a technique of enhancing high temperature resistance of a hop is awaited as countermeasures against advancing global warming in recent years. Since high-temperature stress also induces oxidation stress, whether or not effects of N-acetylglutamic acid for enhancing oxidation stress resistance would be observed in a hop was examined.

### 2. Method of experimentation

### (1) Experimental materials

A hop strain (the variety: Hersbrucker) was used as an experimental material. Hop seedlings grown in the field of Kirin Brewery Company, Limited in Iwate, Japan were used.

### (2) Growth medium

### (i) Agar medium

A Murashige and Skoog Plant Salt Mixture 2.2 g and glucose 20 g (FUJIFILM Wako) were dissolved in 1 l of pure water, and a pH was adjusted to 5.8. Thereafter, agar(8 g (Ina Food Industry Co., Ltd.) was dissolved and autoclaved (121°C, 15 minutes).

### (ii) Liquid medium

A Murashige and Skoog Plant Salt Mixture 2.2 g and glucose 20 g were dissolved in 11 of pure water, a pH was adjusted to 5.8, and the resultant was autoclaved (121°C, 20 minutes).

### (3) Methods for preparing and growing tissue-cultured seedlings

Tissue-cultured seedlings required for evaluation of oxidation stress response of a hop were prepared in a laboratory. A stem fragment including a node was removed from a Hersbrucker seedling as an explant and incubated with 70 (v/v)% ethanol (FUJIFILM Wako) for 1 minute and with 1 (v/v)% sodium hypochlorite (FUJIFILM Wako) for 5 minutes for sterilization. The explant was washed with sterile water for 1 minute, washing was repeated 3 times, moisture was removed therefrom with a paper towel, the explant was inoculated in an agar medium, and culture was initiated in an incubator. The incubator was maintained at a temperature of 20°C for a daily cycle of 16 hours light and 8 hours darkness. Two weeks after the initiation of culture, axillary buds extending from the nodes were cut and inoculated into an agar medium, and the sufficiently grown seedlings were designated as "tissue-cultured seedlings." Tissue-cultured seedlings were subcultured at regular intervals by inoculating apical buds into fresh agar media.

### (4) Growth conditions and oxidation stress application

Leaves (approximately 10 mm) were cut from the tissue-cultured seedlings grown in an agar medium for 3 months at the bases of the blades and the petioles and used as experimental samples. The liquid medium was dispensed at 3 ml/well to the sterilized 12-well microplate (IWAKI), and 3 leaves were inoculated in each well.

To each well, N-acetylglutamic acid was applied to the final concentration of 1 mM, and an equivalent amount of sterile water was added as a control. In addition, an oxidation stress inducer, methyl viologen (MV), was added to the final concentration of 5 µM and the plants were grown at 22°C for an additional 4 days.

Leaf chlorosis is observed in plants upon oxidation stress exposure. Thus, an extent of chlorosis was evaluated by measuring the content of the green pigment chlorophyll in leaves.

Plants in a well (3 leaves) was transferred to a 1.5-ml tube containing 1 ml of N,N-dimethylformamide and incubated at 4°C in the dark for 1 day to extract the chlorophyll. The absorbance of the extract was measured at 647 nm and 664 nm, respectively, to calculate the chlorophyll content on a leaf fresh weight basis. The chlorophyll content was calculated in the same manner as in Example 1.

### 3. Results

The results are shown in Figure 10. In MV-treated groups, leaf chlorosis was more suppressed in the group subjected to 1 mM N-acetylglutamic acid treatment, compared with the control group (Figure 10A). In addition, a decrease in the chlorophyll content was suppressed by N-acetylglutamic acid application in the MV-treated groups, compared with the control group (Figure 10B).

### 4. Conclusion

N-acetylglutamic acid was found to suppress leaf chlorosis caused by oxidation stress. This indicates that N-acetylglutamic acid would provide a hop with oxidation stress resistance.

### Example 11: Increasing expression of oxidation stress-responsive gene by N-acetylglutamic acid in Arabidopsis thaliana

### 1. Objective

In response to oxidation stress, a wide variety of genes are activated in plants, so as to remove growth inhibiting factors, such as generation of active oxygen species in chloroplasts and mitochondrial cell death. When *Arabidopsis thaliana* responds to oxidation stress, transcription factors ZAT10 and ZAT12 regulate the genes that play a role in electron transmission in chloroplasts to thereby suppress active oxygen accumulation in cells (Davletova et al., Plant Physiol., Oct 2005, 139 [2]: 847-856). Accordingly, whether or not N-acetylglutamic acid would increase the ZAT10 expression of and the ZAT12 expression as an effect of enhancing oxidation stress resistance was examined.

### 2. Method of experimentation

### (1) Plant materials

The materials as used in Example 1 were used.

### (2) Growth medium

The medium as used in Example 1 was used.

### Analysis of expression level of oxidation stress-responsive gene by real-time PCR

To the *Arabidopsis thaliana* plants grown for 7 days in the same manner as in Example 1, 0.4 mM N-acetylglutamic acid or an equivalent amount of sterile water was added, and the plants were incubated at 22°C for 2 hours. After incubation for 2 hours, the samples were frozen with liquid nitrogen, and RNA was extracted using the RNeasy Plant Mini Kit (Thermo Fischer Scientific).

cDNA that would be necessary as a real-time PCR template was synthesized from the RNA obtained. 1000 ng total RNA was used for each sample, and cDNA was synthesized using the Verso cDNA Synthesis Kit (Thermo Fischer Scientific). The synthesized cDNA was diluted to 5-fold with sterile distilled water and subjected to real-time PCR. For real-time PCR, a reaction solution containing ZAT10 (AGI code: AT1G27730) and ZAT12 (AGI code: AT5G59820) as the target genes, PP2AA3 (AGI code: AT1G13320) as the reference gene, and TB Green Ex Taq II (TaKaRa) was prepared. PCR was performed with the use of the LightCycler^{®} 480 System (Roche) with the number of amplification cycles of 50. The primers shown below were used.
ZAT10
   Fw: GCTTCTCCGATTCCTCCTTT (SEQ ID NO: 17)
   Rv: GACCACCGAGAGCTTGGTAA (SEQ ID NO: 18)
ZAT12
   Fw: GGCGAATTGTTTGATGCTTT (SEQ ID NO: 19)
   Rv: CAAGCCACTCTCTTCCCACT (SEQ ID NO: 20)
PP2AA3
   Fw: GACCAAGTGAACCAGGTTATTGG (SEQ ID NO: 21)
   Rv: TACTCTCCAGTGCCTGTCTTCA (SEQ ID NO: 22)

Thereafter, the relative expression levels of the target genes upon N-acetylglutamic acid treatment were calculated by the ΔΔCt method using the Cp values obtained by real-time PCR.

### 3. Results

The results are shown in Figure 11. The ZAT10 expression level was increased by 28 times upon N-acetylglutamic acid treatment, compared with the control (Figure 11A). The ZAT12 expression level was increased by 37 times upon N-acetylglutamic acid treatment, compared with the control (Figure 11B).

### 4. Conclusion

The results indicate that N-acetylglutamic acid would increase the expression of the oxidation stress-responsive gene to thereby provide plants with oxidation stress resistance.

### Example 12: Increasing expression of oxidation stress-responsive gene by N-acetylglutamic acid in rice

### 1. Objective

Whether or not effects of N-acetylglutamic acid for increasing the expression of the oxidation stress-responsive gene ZAT12 observed in *Arabidopsis thaliana* would be observed in rice was examined.

### 2. Method of experimentation

In order to design primers for the target genes necessary for gene expression analysis by real-time PCR, homologs of *Arabidopsis thaliana* high-temperature-responsive genes in rice were searched for. The amino acid sequence of *Arabidopsis thaliana* ZAT12 (AGI code: AT5G59820) was obtained from TAIR (https://www.arabidopsis.org/), and the nucleotide sequence of the homolog was obtained using RAP-DB (https://rapdb.dna.affrc.go.jp/). As a reference gene, the nucleotide sequence of the homolog of *Arabidopsis thaliana* ACTIN2 (AGI code: AT3G18780) was also obtained. Homolog genes in rice were designated as OsZAT12 and OsACT1, respectively.

### (1) Experimental materials

The materials as employed in Example 3 were used.

### (2) Method of growing

The method as employed in Example 3 was employed.

### (3) N-acetylglutamic acid treatment and RNA extraction

The rice samples subjected to germination for 3 days were inoculated into a liquid medium consisting of a 1/2 Murashige and Skoog Plant Salt Mixture. Specifically, a liquid medium was dispensed at 3 ml/well to a 12-well microplate (IWAKI), and 3 samples were transferred to each well. N-acetylglutamic acid was applied to each well to the final concentration of 0.5 mM in the medium, incubation was performed at 30°C for 2 hours, and RNA was extracted from the aboveground part using the RNeasy Plant Mini Kit.

### (4) Analysis of expression level of high-temperature-responsive gene by real-time PCR

cDNA that would be necessary as a real-time PCR template was synthesized from the RNA obtained. 1000 ng total RNA was used for each sample, and cDNA was synthesized using the Verso cDNA Synthesis Kit. The synthesized cDNA was diluted to 5-fold with sterile distilled water and subjected to real-time PCR. For real-time PCR, a reaction solution containing OsZAT12 as the target gene, OsACT1 as the reference gene, and TB Green Ex Taq II was prepared. PCR was performed with the use of the LightCycler^{®} 480 System (Roche) with the number of amplification cycles of 50. The primers shown below were used.
OsZAT12
   Fw: ACGACGACGACGAAGAACG (SEQ ID NO: 23)
   Rv: TTCAAGTCCAGGCAGACACC (SEQ ID NO: 24)
OsACT1
   Fw: AGCACATTCCAGCAGATGTG (SEQ ID NO: 25)
   Rv: TTCCTGTGCACAATGGATGG (SEQ ID NO: 26)

Thereafter, the relative expression level of the target gene upon N-acetylglutamic acid treatment was calculated by the ΔΔCt method.

### 3. Results

The results are shown in Figure 12. The OsZAT12 expression level was increased by 2.9 times upon N-acetylglutamic acid treatment, compared with the control.

### 4. Conclusion

The results indicate that N-acetylglutamic acid would increase the expression of the oxidation stress-responsive gene in rice to thereby enhance high-temperature stress resistance.

### Example 13: Increasing expression of oxidation stress-responsive gene by N-acetylglutamic acid in hop

### 1. Objective

Whether or not effects of N-acetylglutamic acid for increasing the expression of the oxidation stress-responsive genes ZAT10 and ZAT12 observed *in Arabidopsis thaliana* would be observed in hop was examined.

### 2. Method of experimentation

### (1) Plant materials

The materials as used in Example 4 were used.

### (2) Growth medium

The medium as used in Example 4 were used.

### (3) Analysis of expression level of oxidation stress-responsive gene by real-time PCR

In order to design primers for the target genes necessary for gene expression analysis by real-time PCR, homologs of *Arabidopsis thaliana* oxidation stress-responsive genes in hop were searched for. The amino acid sequences of *Arabidopsis thaliana* ZAT10 (AGI code: AT1G27730) and ZAT12 (AGI code: AT5G59820) were obtained from TAIR (https://www.arabidopsis.org/), and the nucleotide sequences of the gene homologs were obtained using Hopbase (http:/hopbase.cgrb.oregonstate.edu/). When obtaining the nucleotide sequences of homologs, TBLASTN searches were performed with the use of the amino acid sequences of *Arabidopsis thaliana* as the query sequences to select the gene exhibiting the highest score as the hop homolog from among the genes exemplified as homolog candidates. As the reference gene, the nucleotide sequence of the homolog of *Arabidopsis thaliana* EF1α (AGI code: AT1G18070) was obtained. The hop homolog genes were designated as HlZAT10, HlZAT12, and HlEF1α, respectively.

The leaves in the first and the second nodes from the apical buds of the tissue-cultured seedlings were sampled 1.5 months after the initiation of subculture and inoculated into a liquid medium consisting of a 1/2 Murashige and Skoog Plant Salt Mixture and 2 (w/v)% glucose. Specifically, a liquid medium was dispensed at 5 ml/well to a 6-well microplate, and 5 hop leaves were mounted thereon. N-acetylglutamic acid was applied to each well to the final concentration of 1 mM in the medium, incubation was performed at 20°C for 2 hours, and RNA was extracted from the leaves using the RNeasy Plant Mini Kit.

cDNA that would be necessary as a real-time PCR template was synthesized from the RNA obtained. 1000 ng total RNA was used for each sample, and cDNA was synthesized using the Verso cDNA Synthesis Kit. The synthesized cDNA was diluted to 5-fold with sterile distilled water and subjected to real-time PCR. For real-time PCR, a reaction solution containing HlZAT10 and HlZAT12 as the target genes, HlEF1α as the reference gene, and TB Green Ex Taq II was prepared. PCR was performed with the use of the LightCycler^{®} 480 System (Roche) with the number of amplification cycles of 50. The primers shown below were used.
HlZAT10
   Fw: CAATTCTCCAACCACGGCTAAC (SEQ ID NO: 27)
   Rv: ATGGCTCGTGGAATTGGAGAG (SEQ ID NO: 28)
HlZAT12
   Fw: CCTGGACATGGCTAATTGCTTG (SEQ ID NO: 29)
   Rv: AAGTCTTGCAAGCGAACACG (SEQ ID NO: 30)
HlEF1α
   Fw: TTTTGCTGTCAGGGACATGC (SEQ ID NO: 31)
   Rv: TTGGCAGCGGATTTGGTAAC (SEQ ID NO: 32)

Thereafter, the relative expression levels of the target genes upon N-acetylglutamic acid treatment were calculated by the ΔΔCt method.

### 3. Results

The results are shown in Figure 13. The HlZAT10 expression level was increased by 1.7 times upon N-acetylglutamic acid treatment, compared with the control (Figure 13A). The HlZAT12 expression level was increased by 1.9 times upon N-acetylglutamic acid treatment, compared with the control (Figure 13B).

### 4. Conclusion

The results indicate that N-acetylglutamic acid would increase the expression of the oxidation stress-responsive genes in a hop to thereby enhance oxidation stress resistance.

### Example 14: Enhancement of histone acetylation of oxidation stress-responsive gene and high-temperature stress-responsive gene by N-acetylglutamic acid in Arabidopsis thaliana

### 1. Objective

Plants cannot move like animals do. Accordingly, plants need to rapidly respond to various types of environmental stresses. When plants are exposed to environmental stresses, the expression of genes associated with environmental stress response changes rapidly to a significant extent. Epigenetic modification represented by histone modification or DNA methylation supports such change. Among various types of epigenetic modification, histone acetylation activates the gene expression, and plants that have actually received environmental stress are known to exhibit the increased histone acetylation level (Kurita et al., Sci. Rep., Apr 18, 2017; 7: 45894).

Examples 11 to 13 demonstrate that N-acetylglutamic acid would increase the expression of the oxidation stress-responsive ZAT10 and ZAT12 genes and of the high-temperature stress-responsive HSFA2 gene, although the mechanism for increasing the expression remains unknown. Accordingly, the present inventors deduced that N-acetylglutamic acid would increase the expression via histone acetylation and analyzed the histone acetylation levels of the ZAT10 gene, the ZAT12 gene, and the HSFA2 gene in plants treated with N-acetylglutamic acid.

### 2. Method of experimentation

### (1) Experimental materials

A wild-type *Arabidopsis thaliana* strain (accession: Col-0) was used as an experimental material. Seeds were purchased from Inplanta Innovations Inc. (https://www.inplanta.jp/).

### (2) Method of growing

A liquid medium containing a 1/2 Murashige and Skoog Plant Salt Mixture (Nacalai) and 1 (w/v)% sucrose (FUJIFILM Wako) was used as a growth medium.

*Arabidopsis thaliana* seeds were sterilized with the use of a Kitchen Haiter^{®} liquid (Kao Corporation) diluted to one-half concentration with distilled water for 3 minutes, washed 3 times with sterile distilled water, and then incubated at 4°C overnight. The growth medium (100 ml) was prepared in a 300-ml flask, the incubated seeds were seeded therein, the flask was transferred to an incubator (TOMY), and shake culture was then initiated. The incubator was maintained at a temperature of 22°C for a daily cycle of 16 hours light and 8 hours darkness, and the rotation speed of the shaker was set at 180 rpm.

### (3) N-acetylglutamic acid treatment and plant sample fixation

A stock solution of N-acetylglutamic acid (Tokyo Chemical Industry Co., Ltd.) was added to *Arabidopsis thaliana* 7 days after seeding to the final concentration of 0 mM and 0.4 mM in the media, followed by incubation for 2 hours. Sample fixation following incubation was performed in accordance with Yamaguchi et al (Arabidopsis Book, Feb 17, 2014; 12: e0170). Following incubation, plants were transferred to vial bottles containing D-PBS (Nacalai), D-PBS was removed therefrom, and 1% (v/v) formaldehyde (FUJIFILM Wako)/D-PBS was then dispensed thereinto. After incubation was performed for 4 minutes, formaldehyde was allowed to impregnate into the plants by deaeration performed for 11 minutes. Following deaeration, formaldehyde was removed, and incubation was performed with the addition of 0.125 M glycine (FUJIFILM Wako)/PBS so as to terminate the fixation reaction. After incubation was performed for 5 minutes, glycine was allowed to impregnate into the plants by deaeration performed for 1 minute and 30 seconds. Thereafter, the plants were washed 3 times with pre-cooled D-PBS.

### (4) Quantification of histone acetylation level by chromatin immunoprecipitation and quantitative PCR

Chromatin immunoprecipitation was performed with reference to Yamaguchi et al. (Arabidopsis Book, Feb 17 2014; 12: e0170). The fixed plants were grounded using liquid nitrogen and a mortar, and 2.5 ml of a nuclear extraction buffer (100 mM MOPS (pH 7.6) (Nacalai), 10 mM MgCl₂ (FUJIFILM Wako), 5% (w/v) Dextran T-40 (Sigma), 2.5 % (w/v) Ficoll (Sigma), 40 mM β-mercaptoethanol (Life Technologies Japan Ltd.), 1 × Protease Inhibitor (Sigma)) was added. A mixture of the grounded plants and the nuclear extraction buffer was allowed to pass through a bilayer Miracloth (Merck), and the filtrate was collected and centrifuged at 4°C and 10,400 rpm for 5 minutes. After the supernatant was removed, the pellets were dissolved with 75 µl of a nuclear extraction buffer (50 mM Tris-HCl (pH 8.0) (Nacalai), 10 mM EDTA (pH 8.0) (Nacalai), 1% (w/v) SDS (NIPPON GENE CO., LTD.)), and the tube was incubated in ice for 30 minutes. In this case, the tube was tapped every 5 minutes. Following incubation, 625 µl of ChIP dilution buffer (16. 7 mM Tris-HCl (pH 8.0), 167 mM NaCl (Nacalai), 1.2 mM EDTA, 0.01 % (w/v) SDS) was added, and chromatin fragmentation was performed via ultrasonication. Ultrasonication was performed using BIORUPTOR^{®} UCD-250 (Cosmo Bio Co., Ltd.) on ice under the conditions below: power mode: H; on/off cycle: 30 s/60 s, and total duration: 12 min). Following sonication, 220 µl of the ChIP dilution buffer containing 1.1% (v/v) Triton X-100 (FUJIFILM Wako) and 35 µl of a 22% (v/v) Triton-X 100 was added and mixed, and the resulting substance was centrifuged at 4°C and 13,200 rpm for 5 minutes. Following centrifugation, the supernatant was collected, and pre-clearing was performed with the addition of 30 µl of Dynabeads Protein G (VERITAS) with rotation at 4°C for 1 hour. The supernatant was collected with the use of a magnetic stand, a 18-µl fraction was cryopreserved as an input, and 5 µl of the Anti-acetyl-Histone H4 antibody (06-598, Merck) was dispensed into the remaining samples. Thereafter, an antibody reaction with chromatin was performed with rotation at 4°C overnight.

Following rotation, 50 µl of Dynabeads Protein G was added to the sample, and the antibody was allowed to adsorb to Dynabeads with rotation at 4°C for 6 hours. Thereafter, chromatin was washed two times with 1 ml of a Low Salt Wash buffer (0.1% (w/v) SDS, 1% (v/v) Triton-X 100, 2 mM (w/v) EDTA, 20 mM Tris-HCl (pH 8.0), 150 mM NaCl), two times with 1 ml of 250 ml LiCl Wash buffer (0.25 M LiCl, 1% (v/v) IGEPAL-CA630 (Sigma), 1% (w/v) deoxycholate, 1 mM EDTA, 10 mM Tris-HCl (pH 8.0)), and two times with 1 ml of 0.5% (v/v) TE buffer. This procedure was performed at 4°C, and the samples were collected using a magnetic stand. After chromatin was washed with 0.5% (v/v) TE buffer, Dynabeads were mixed in 50 µl of a nuclear lysis buffer via pipetting, and the resultant was incubated at 65°C for 30 minutes. Following incubation, the samples were collected, and the same procedure was repeated. To the collected chromatin sample and the cryopreserved input sample, 82 µl of 5 M NaCl (Nacalai) and 6 µl thereof were added, and the samples were incubated at 65°C overnight for decrosslinking.

Following decrosslinking, DNA was purified from the samples. DNA was purified with the use of the QIAquick PCR Purification Kit (QIAGEN). The samples were supplemented with 550 µl of Buffer PB, vortexed for 30 minutes, dispensed into the QIAquick spin column, and then centrifuged at 13,200 rpm for 1 minute. The filtrate was removed, centrifugation was performed again, the filtrate was removed again, and 750 µl of Buffer PE was then added. Following centrifugation at 13,200 rpm for 1 minute, the filtrate was removed, and centrifugation was performed again. 50% (v/v) EB buffer was added to the column, incubation was performed for 5 minutes, and centrifugation was performed at 13,200 rpm for 1 minute. The filtrate was allowed to pass through the column again, centrifugation was performed at 13,200 rpm for 1 minute, and the filtrate was collected as a DNA sample.

The DNA samples obtained were used as materials to quantify the histone H4 acetylation levels of the target genes by real-time PCR. For real-time PCR, a reaction solution containing HSFA2 (AGI code: AT2G26150), ZAT10 (AGI code: AT1G27730), and ZAT12 (AGI code: AT5G59820) as the target genes, TA3 as the reference gene, and TB Green Ex Taq II (TaKaRa) was prepared. PCR was performed with the use of the LightCycler^{®} 480 System (Roche) with the number of amplification cycles of 50. The primers shown below were used.
ZAT10
   Fw: TTCAGTCTTCCATGGAGTCGAG (SEQ ID NO: 33)
   Rv: GAGGTTTTGGTGGTGGAAATCG (SEQ ID NO: 34)
ZAT12
   Fw: TGCGATATCGGAGATCAAGTCG (SEQ ID NO: 35)
   Rv: TTTTGATCGCCACCGTCAAC (SEQ ID NO: 36)
HSFA2
   Fw: TCCACGCCTCAATCTCTCAAC (SEQ ID NO: 37)
   Rv: TGGGTTTTGGGTAAAGTTTGCG (SEQ ID NO: 38)
TA3
   Fw: CTGCGTGGAAGTCTGTCAAA (SEQ ID NO: 39)
   Rv: CTATGCCACAGGGCAGTTTT (SEQ ID NO: 40)

Thereafter, the histone H4 acetylation levels of the target genes upon N-acetylglutamic acid treatment were calculated by the percent input method using the Cp values obtained by real-time PCR.

### 3. Results

The results are shown in Figure 14. As shown in Figure 14, the histone H4 acetylation levels of ZAT10, ZAT12, and HSFA2 were increased by 1.9 times, 2.3 times, and 2 times respectively, 2 hours after N-acetylglutamic acid application, compared with the group not subjected to the treatment.

### 4. Conclusion

The results indicate that N-acetylglutamic acid would elevate the histone acetylation levels of the oxidation stress-responsive gene and the high-temperature stress-responsive gene in *Arabidopsis thaliana.*

### Example 15: Effects of N-acetylglutamic acid for accelerating expression of histone acetyltransferase in Arabidopsis thaliana

### 1. Objective

N-acetylglutamic acid was found to elevate the histone acetylation levels of the oxidation stress-responsive genes ZAT10 and ZAT12 and the high-temperature stress-responsive gene HSFA2, although the molecular mechanism for elevating the acetylation level remains unknown.

In response to environmental stress, several histone acetyltransferases are reported to elevate the histone acetylation levels of stress responsive genes in plants, so as to accelerate gene expression (Lindermayr et al., Mol. Metab., Aug 2020; 38: 100951). Accordingly, whether or not N-acetylglutamic acid treatment would increase the expression levels of histone acetyltransferases; i.e., HAC1 and HAC12, known to be correlated with stress response, was examined.

### 2. Method of experimentation

### (1) Experimental materials

The materials as used in Example 14 were used.

### (2) Method of growing

A liquid medium containing a 1/2 Murashige and Skoog Plant Salt Mixture (Nacalai) and 1 (w/v)% sucrose (FUJIFILM Wako) was used as a growth medium.

*Arabidopsis thaliana* seeds were sterilized with the use of a Kitchen Haiter^{®} liquid (Kao Corporation) diluted to one-half concentration with distilled water for 3 minutes, washed 3 times with sterile distilled water, and then incubated at 4°C overnight. The growth medium was dispensed at 1 ml/well on a 12-well microplate (IWAKI), 5 grains of the seeds were inoculated in each well, and the plate was transferred to the incubator (TOMY) to initiate growing. The incubator was maintained at a temperature of 22°C for a daily cycle of 16 hours light and 8 hours darkness.

### (3) N-acetylglutamic acid treatment and RNA extraction

N-acetylglutamic acid was applied to *Arabidopsis thaliana* 7 days after inoculation to the final concentration of 0.1 mM in the medium, followed by incubation for 2 hours or 6 hours. The incubator was maintained at a temperature of 22°C for a daily cycle of 16 hours light and 8 hours darkness. After incubation, the samples were frozen with liquid nitrogen, and RNA was extracted using the RNeasy Plant Mini Kit (Thermo Fischer Scientific).

### (4) Analysis of expression level of high-temperature-responsive gene by real-time PCR

cDNA that would be necessary as a real-time PCR template was synthesized from the RNA obtained. 500 ng total RNA was used for each sample, and cDNA was synthesized using the Verso cDNA Synthesis Kit (Thermo Fischer Scientific). The synthesized cDNA was diluted to 5-fold with sterile distilled water and subjected to real-time PCR. For real-time PCR, a reaction solution containing HAC1 (AGI code: AT1G79000) and HAC12 (AGI code: AT1G16710) as the target genes, ACTIN2 (AGI code: AT3G18780) as the reference gene, and TB Green Ex Taq II (TaKaRa) was prepared. PCR was performed with the use of the LightCycler^{®} 480 System (Roche) with the number of amplification cycles of 50. The primers shown below were used.
HAC1
   Fw: TTTGTCACGACCTGCAATGC (SEQ ID NO: 41)
   Rv: AACAGGCATTGCACACATCG (SEQ ID NO: 42)
HAC12
   Fw: ACAGCAGCAGCAGCAATTTC (SEQ ID NO: 43)
   Rv: TTTCCCCAAGCCATCATTGC (SEQ ID NO: 44)
ACTIN2
   Fw: GATCTCCAAGGCCGAGTATGAT (SEQ ID NO: 45)
   Rv: CCCATTCATAAAACCCCAGC (SEQ ID NO: 46)

Thereafter, the relative expression levels of the target genes upon N-acetylglutamic acid treatment were calculated by the ΔΔCt method using the Cp values obtained by real-time PCR.

### 3. Results

The results are shown in Figure 15. As shown in Figure 15, the HAC1 expression level and the HAC12 expression level were increased by 1.2 times and 1.3 times, respectively, 2 hours after N-acetylglutamic acid application, compared with the group not subjected to the treatment.

### 4. Conclusion

The results indicate that N-acetylglutamic acid would increase the expression of histone acetyltransferase in *Arabidopsis thaliana* to thereby accelerate histone acetylation of the oxidation stress-responsive gene and the high-temperature stress-responsive gene.

### Industrial Applicability

With the application of N-acetylglutamic acid or a salt or solvate thereof to a plant, a plant can be provided with environmental stress resistance. As a result, the plant yield can be increased under severe environment in which plants are exposed to environmental stress.

All publications, patents, and patent applications cited herein are incorporated herein by reference in their entirety.

## Claims

1. A composition for providing a plant with environmental stress resistance comprising, as an active ingredient, N-acetylglutamic acid or a salt or solvate thereof.

2. The composition according to claim 1, wherein the plant is a dicotyledonous plant or a monocotyledonous plant.

3. The composition according to claim 1, wherein the plant is a monocotyledonous plant.

4. The composition according to claim 3, wherein the plant is a plant of *Gramineae.*

5. The composition according to claim 1, wherein the plant is a plant of *Cannabaceae* or a plant of *Brassicaceae.*

6. The composition according to claim 5, wherein the plant is a hop.

7. The composition according to claim 1, wherein the environmental stress is at least one type of stress selected from the group consisting of high-temperature stress, low-temperature stress, oxidation stress, high-light stress, dehydration stress, chemical stress, and damage stress.

8. The composition according to claim 7, wherein the environmental stress is high-temperature stress or oxidation stress.

9. A method for producing a plant with environmental stress resistance comprising applying N-acetylglutamic acid or a salt or solvate thereof to a plant.

10. The method according to claim 9, wherein the plant is a dicotyledonous plant or a monocotyledonous plant.

11. The method according to claim 9, wherein the plant is a monocotyledonous plant.

12. The method according to claim 11, wherein the plant is a plant of *Gramineae.*

13. The method according to claim 9, wherein the plant is a plant of *Cannabaceae* or a plant of *Brassicaceae.*

14. The method according to claim 13, wherein the plant is a hop.

15. The method according to claim 9, wherein the environmental stress is at least one type of stress selected from the group consisting of high-temperature stress, low-temperature stress, oxidation stress, high-light stress, dehydration stress, chemical stress, and damage stress.

16. The method according to claim 15, wherein the environmental stress is high-temperature stress or oxidation stress.

17. A method for providing a plant with environmental stress resistance comprising applying N-acetylglutamic acid or a salt or solvate thereof to a plant.

18. A composition for increasing the expression of a protein encoded by an environmental stress-responsive gene of a plant comprising, as an active ingredient, N-acetylglutamic acid or a salt or solvate thereof, wherein the protein encoded by an environmental stress-responsive gene is ZAT, HSFA, or HSP.

19. A composition for enhancing plant growth comprising, as an active ingredient, N-acetylglutamic acid or a salt or solvate thereof.

20. A composition for reinforcing epigenetic modification of an environmental stress-responsive gene of a plant comprising, as an active ingredient, N-acetylglutamic acid or a salt or solvate thereof.

21. A composition for increasing the expression of histone acetyltransferase that elevates the histone acetylation level of an environmental stress-responsive gene of a plant comprising, as an active ingredient, N-acetylglutamic acid or a salt or solvate thereof.
